# EUROPEAN PATENT SPECIFICATION

(11) **EP 1 190 393 B1**
(45) Date of publication and mention of the grant of the patent: **18.05.2005**
(21) Application number: 00931683.7
(22) Date of filing: 02.06.2000
(51) Int. Cl.: G06T 15/20

(54) **METHOD AND APPARATUS FOR RENDERING IMAGES**
VERFAHREN UND VORRICHTUNG ZUR BILDWIEDERGABE
PROCEDE ET APPAREIL DE RENDU D'IMAGES

(30) Priority: 07.06.1999 JP 16017799
(43) Date of publication of application: 27.03.2002
(73) Proprietor: Sony Computer Entertainment Inc., Tokyo 107-0052 (JP)
(72) Inventor: AOKI, Sachiyo Sony Computer Entertainment Inc., Minato-ku, Tokyo 107-0052 (JP)
(74) Representative: DeVile, Jonathan Mark, Dr.
(86) International application number: PCT/JP2000/003616
(87) International publication number: WO 2000/075873

(56) References cited:
- EP-A- 0 311 081
- US-A- 5 577 960
- US-A- 5 786 822
- US-A- 5 808 619

## Description

### Technical Field

The present invention relates to a method of and an apparatus for rendering an image of a number of objects of the same shape, e.g., a school of fish, a recording medium which stores a program for rendering such an image, and a program for rendering such an image.

### Background Art

Recently, various computer graphics (CG) processing techniques including hidden line processing, hidden surface removal, smooth shading, texture mapping, etc. have been in rapid progress in combination with quickly growing hardware technologies.

According to a general CG processing scheme, a plurality of three-dimensional shapes (objects) are generated by three-dimensional modeling of CAD, and a rendering process is performed by generating applying colors and shades to the objects, adding optical properties including mirror reflection, diffuse reflection, refraction, transparency, etc. to the objects, adding surface patterns to the objects, and plotting images depending on surroundings such as window and scenery reflections and ambient light.

When a number of objects of the same shape such as a school of fish are plotted, the above rendering process is performed on the generated objects. However, since the rendering process is performed on each small polygon, it is time-consuming to make calculations and plot the objects, resulting in a disadvantage in that the objects are displayed on a display monitor at the reduced rate.

One solution would be to plot all objects with simple sprites. Using sprites is, however, problematic in that some expression-related limitations occur, e.g., motions that have not been prepared cannot be plotted.

US 5,786,822 discloses a method and apparatus for generating a representation of an object from a plurality of different view points. Different texture data is provided for each view point direction and when the object is displayed, the texture data corresponding to the direction of viewing the surface of the object is selected and mapped onto the representation of the object.

### Disclosure of Invention

It is therefore an object of the present invention to provide a method of and an apparatus for rendering an image, a recording medium which stores a program for rendering such an image, and a program for rendering such an image, by performing a rendering process on certain ones of a number of objects, e.g., visually attractive objects, moving objects, nearby objects, etc., and simply applying a texture to other objects, so that the period of time required to make calculations and plot the objects can greatly be reduced, and the objects can be plotted of high quality.

Generally, a rendering process effects the perceptive transformation on the vertexes of a number of polygons that make up an object, and plots the resultant polygons together with texture expression and hidden surface removal.

If N objects each made up of x polygons are to be displayed, then N rendering processes need to be carried out with respect to the x polygons. Therefore, the entire procedure is very time-consuming.

There are instances where not all objects demand the same image quality. For example, if a large number of fish are plotted, fishes that are present back in the scene cannot visually be clearly perceived and less visually attractive.

According to the present invention, when a large school of fish are plotted, some of them are plotted according to a normal rendering process, and others are plotted according to a simpler process.

According to the present invention, there are provided a method and apparatus according to claims 1 and 5.

Further variations are provided in accordance with claims 2-4 and 6-10.

The objects, features, and advantages of the present invention will become more apparent from the following description when taken in conjunction with the accompanying drawings in which a preferred embodiment of the present invention is shown by way of illustrative example.

### Brief Description of Drawings

FIG. 1 is a block diagram of a general arrangement of an entertainment apparatus according to an embodiment of the present invention;
FIG. 2 is a view illustrative of an example of a decision criterion for determining a detailed plotting process and a simple plotting process;
FIG. 3 is a view illustrative of another example of a decision criterion for determining a detailed plotting process and a simple plotting process;
FIG. 4 is a view showing an object as viewed from an arbitrary viewpoint when the object is viewed universally;
FIG. 5 is a view showing prepared textures which are plotted as viewed from arbitrary viewpoints (substitute viewpoints) when the object is viewed universally;
FIG. 6 is a view illustrative of the relationship between actual viewpoints and substitute viewpoints;
FIG. 7 is a view showing an object as viewed from a plurality of viewpoints (substitute viewpoints) selected from a plurality of viewpoints that are used in an actual plotting process;
FIG. 8 is a view showing prepared textures which are plotted as viewed from a plurality of viewpoints (substitute viewpoints) selected from a plurality of viewpoints that are used in an actual plotting process;
FIG. 9 is a view illustrative of the relationship between actual viewpoints and substitute viewpoints;
FIG. 10 is a diagram showing a provisional object by way of example;
FIG. 11A is a diagram showing the layout of a provisional object with an actual viewpoint positioned at a substitute viewpoint k;
FIG. 11B is a diagram showing the layout of provisional objects with respect to actual viewpoints M, N, O (the viewpoint N being omitted);
FIG. 11C is a diagram showing the provisional objects shown in FIG. 11B, as viewed directly above, i.e., in a negative y-axis direction;
FIG. 12 is a block diagram showing steps of a process carried out by an object group plotting means according to a first embodiment of the present invention;
FIG. 13 is a diagram showing details of a texture information table;
FIG. 14 is a functional block diagram of an image plotting means in the object group plotting means according to the first embodiment of the present invention;
FIG. 15 is a functional block diagram of a selective plotting means;
FIG. 16 is a functional block diagram of a detailed rendering means;
FIG. 17 is a functional block diagram of a simple rendering means;
FIG. 18 is a diagram showing details of an object information table;
FIG. 19 is a diagram showing details of a detailed object file;
FIG. 20 is a diagram showing details of a simple object file;
FIG. 21 is a diagram showing details of a motion information table;
FIG. 22 is a flowchart of a processing sequence of the image plotting means;
FIG. 23 is a flowchart of a processing sequence of the selective plotting means;
FIG. 24 is a flowchart of a processing sequence of the detailed rendering means;
FIG. 25 is a flowchart of a processing sequence of the simple rendering means;
FIG. 26 is a functional block diagram of a simple rendering means in an object group plotting means according to a second embodiment of the present invention;
FIG. 27 is a flowchart of a processing sequence of the simple rendering means;
FIG. 28 is a functional block diagram of a texture setting means in an object group plotting means according to a third embodiment of the present invention;
FIG. 29 is a diagram showing details of a viewpoint coordinate table;
FIGS. 30 and 31 are a flowchart of a processing sequence of the texture setting means;
FIG. 32 is a view illustrative of the manner in which texture images are generated when objects comprise main objects and auxiliary objects;
FIG. 33 is a diagram showing details of an object information table;
FIG. 34 is a diagram showing details of a detailed object file;
FIG. 35 is a diagram showing details of a simple object file;
FIG. 36 is a block diagram showing steps of a process carried out by an object group plotting means according to a fourth embodiment of the present invention;
FIG. 37 is a diagram showing details of a texture information table;
FIG. 38 is a functional block diagram of a texture setting means in an object group plotting means according to a fifth embodiment of the present invention;
FIG. 39 is a functional block diagram of a main object processing means;
FIG. 40 is a functional block diagram of an auxiliary object processing means;
FIG. 41 is a diagram showing details of an auxiliary object information table;
FIGS. 42 and 43 are a flowchart of a processing sequence of the texture setting means;
FIG. 44 is a flowchart of a processing sequence of the main object processing means; and
FIG. 45 is a flowchart of a processing sequence of the auxiliary object processing means.

### Best Mode for Carrying Out the Invention

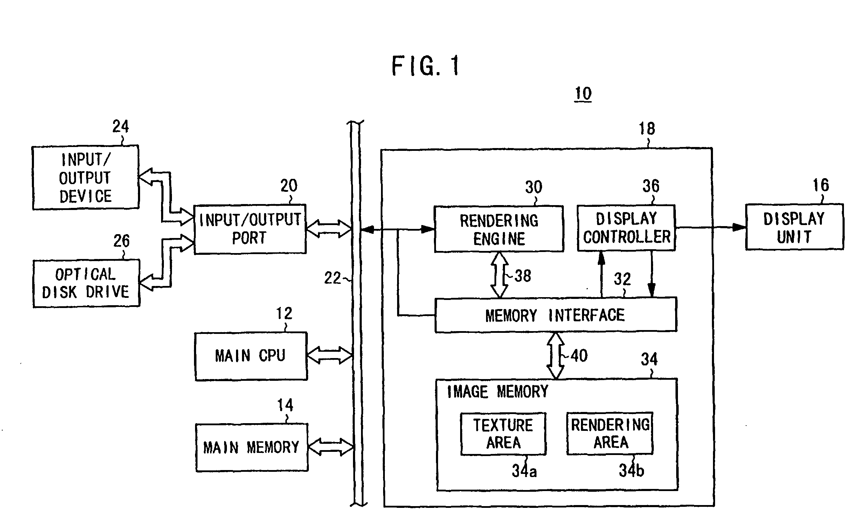

An embodiment in which a method of and an apparatus for rendering an image, as applied to an entertainment apparatus for performing three-dimensional CG processing, will be described below with reference to FIGS. 1 through 45.

As shown in FIG. 1, an entertainment apparatus 10 comprises a main CPU 12 for controlling the entertainment apparatus 10, a main memory 14 for storing various programs to be run and various data, an image processor 18 for generating image data under the control of the main CPU 12 and out-putting the generated image data to a display unit 16, e.g., a CRT, and an input/output port 20 for sending data to and receiving data from external devices.

The main memory 14, the image processor 18, and the input/output port 20 are connected to the main CPU 12 via a bus 22. To the input/output port 20, there are connected an input/output device 24 for inputting data (key entry data, coordinate data, etc.) to the entertainment apparatus 10, and an optical disk drive 26 for playing back an optical disk such as a CD-ROM or the like in which various programs and data (object-related data, texture data, etc.) are registered.

The image processor 18 comprises a rendering engine 30, a memory interface 32, an image memory 34, and a display controller 36 such as a programmable CRT controller or the like.

The rendering engine 30 serves to render image data in the image memory 34 via the memory interface 32 based on a rendering command supplied from the main CPU 12.

A first bus 38 is connected between the memory interface 32 and the rendering engine 30, and a second bus 40 is connected between the memory interface 32 and the image memory 34. Each of the first and second buses 38, 40 has a 128-bit width for allowing the rendering engine 30 to render image data in the image memory 34 at a high speed.

The rendering engine 30 is capable of rendering image data of 320 × 240 pixels or image data of 640 × 480 pixels according to the NTSC or PAL system on a real-time fashion, i.e., in 1/60 seconds to 1/30 seconds, more than ten times to several ten times.

The image memory 34 is of a unified memory structure that is able to designate a texture area 34a and a rendering area 34b as the same area.

The image controller 36 writes texture data read via the optical disk drive 26 or texture data generated in the main memory 14 via the memory interface 32 into the texture area 34a of the image memory 34, and reads image data rendered in the rendering area 34b of the image memory 34 via the memory interface 32 and outputs the read image data to the display unit 16 to display an image thereon.

A characteristic function of the entertainment apparatus 10, i.e., a function to plot a number of objects of identical shape at a high speed, will be described below.

This function is recorded as a program (object group plotting means) in an optical disk. The function can be read from the optical disk, stored into the main memory 14 via the optical disk drive 26, and performed by being executed from a certain address thereof.

Several embodiments of the object group plotting means will be described below.

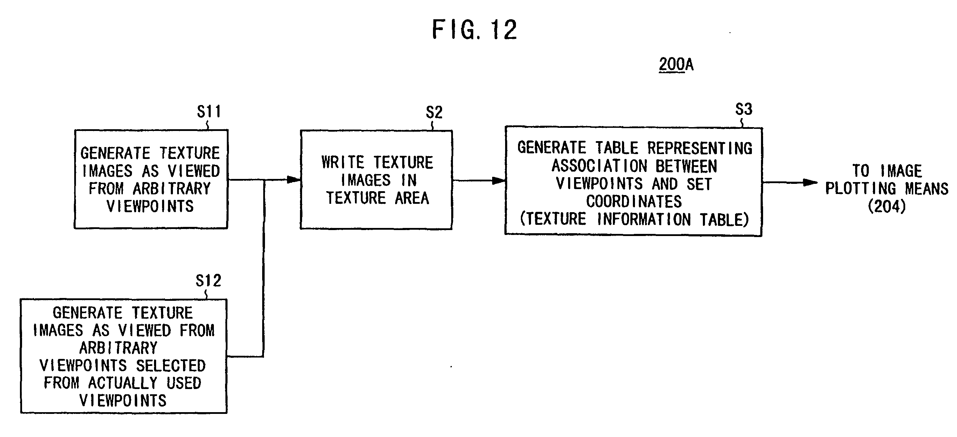

An object group plotting means 200A (see FIG. 12) according to a first embodiment of the present invention generates a plurality of texture images of a single object as viewed from various viewpoints, and, for plotting a plurality of identical objects, effects a normal rendering process on those objects which are to be plotted in detail according to a predetermined decision criterion, and selects a texture image depending on the direction to be plotted from the generated texture images and uses the selected texture image as a texture for those objects which are to be plotted simply.

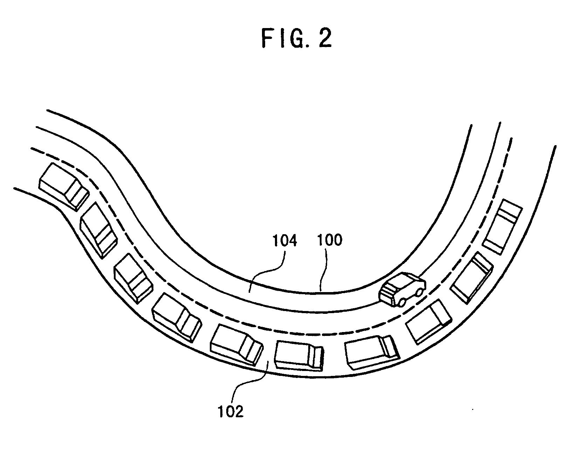

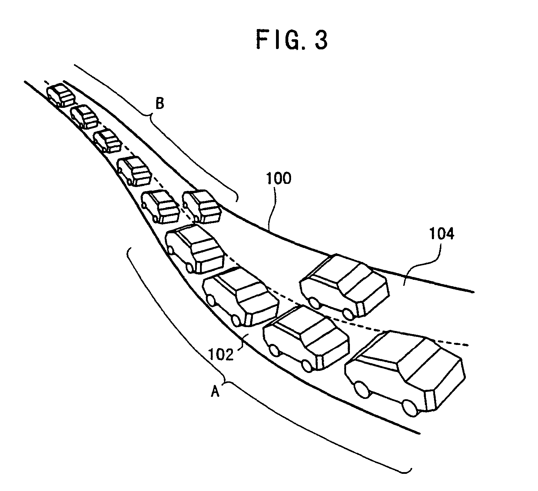

The processing of objects to be plotted simply will be described in specific detail below. As shown in FIGS. 2 and 3, there is assumed a scene in which a number of automobiles suffer a traffic jam in one lane 102 of an expressway 100 and automobiles run smoothly on another lane 104 thereof. Prior to plotting actual objects, i.e., automobiles, objects as viewed from different viewpoints and expressed in a texture are prepared in advance.

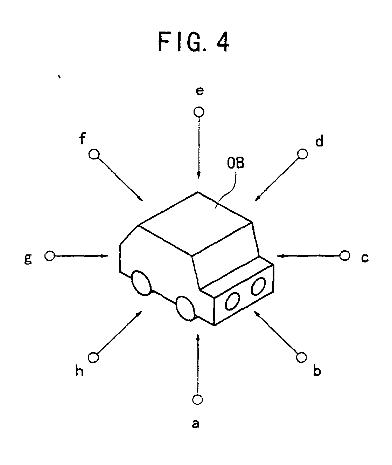

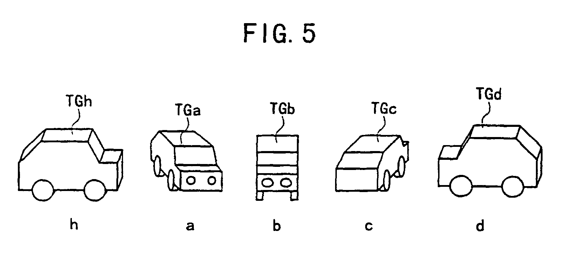

One such object processing process (first process) will be described below.
(1) As shown in FIG. 4, for example, objects OB are plotted which represent an object OB shaped as an automobile as viewed universally from arbitrary viewpoints a - h.
(2) The plotted images are saved as texture images. As shown in FIG. 5, the texture images (TGa - TGh) as viewed from the generated viewpoints a - h are stored in the texture area 34a. In FIG. 5, the texture images TGe, TGf, TGg are omitted from illustration.

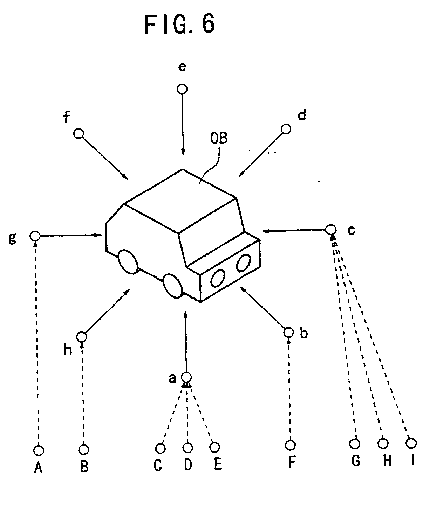

For actually plotting a number of objects, as shown in FIG. 6, of the arbitrary viewpoints (referred to as "substitute viewpoints a - h") used in the generation of the texture images, substitute viewpoints close to actual viewpoints A - I from which the objects are to be actually plotted are selected, and texture images corresponding to the selected viewpoints are used as a texture for plotting the objects.

In FIG. 6, the substitute viewpoint a corresponding to the actual viewpoints C - E is selected, the substitute viewpoint b corresponding to the actual viewpoint F is selected, the substitute viewpoint c corresponding to the actual viewpoints G - I is selected, the substitute viewpoint h corresponding to the actual viewpoint B is selected, and the substitute viewpoint g corresponding to the actual viewpoint A is selected.

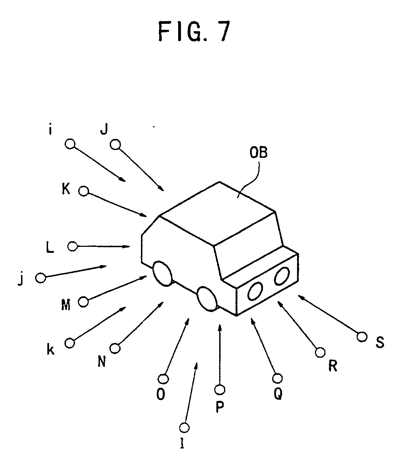

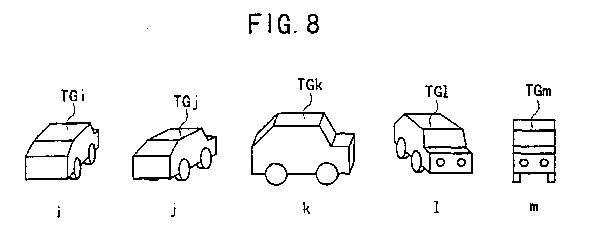

Another object processing process (second process) will be described below.
(1) As shown in FIG. 7, for example, objects OB are plotted which represent an object OB shaped as an automobile as viewed from a plurality of viewpoints (substitute viewpoints i - m) that are selected from a plurality of viewpoints J - S used in actually plotting objects. New typical substitute viewpoints may be generated as the substitute viewpoints i - m from the viewpoints J - S used in actually plotting objects.
(2) The plotted images are saved as texture images. As shown in FIG. 8, the texture images (TGi - TGm) as viewed from the generated viewpoints i - m are stored in the texture area 34a.

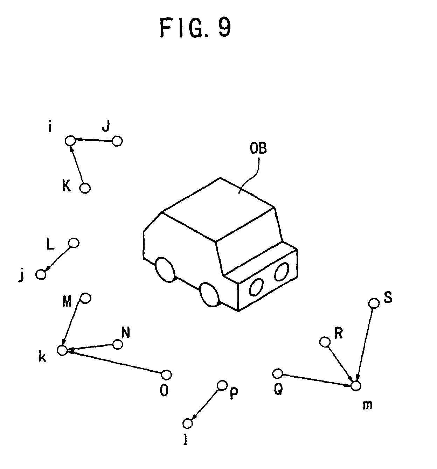

For actually plotting a number of objects, as shown in FIG. 9, of the substitute viewpoints i - m used in the generation of the texture images, substitute viewpoints close to actual viewpoints J - S from which the objects are to be actually plotted are selected, and texture images corresponding to the selected viewpoints are used as a texture for plotting the objects.

In FIG. 9, the substitute viewpoint i corresponding to the actual viewpoints J, K is selected, the substitute view-point j corresponding to the actual viewpoint L is selected, the substitute viewpoint k corresponding to the actual viewpoints M - O is selected, the substitute viewpoint 1 corresponding to the actual viewpoint P is selected, and the substitute viewpoint m corresponding to the actual viewpoints Q - S is selected.

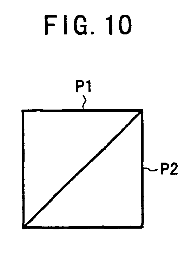

If an object before a texture is applied thereto is defined as a provisional object, then, as shown in FIG. 10, an object comprising two triangular polygons P1, P2 is used as the provisional object.

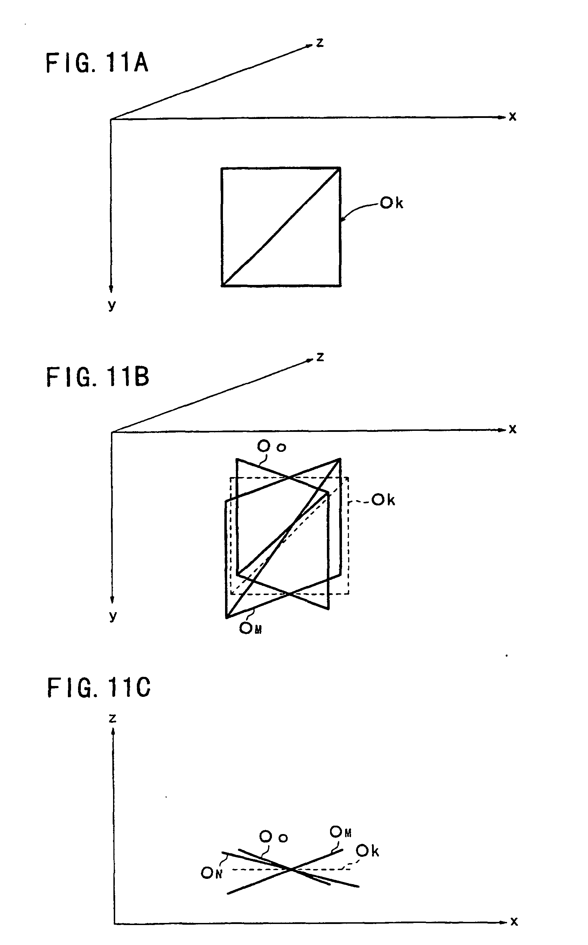

In FIG. 9, it is assumed that the substitute viewpoint k is selected with respect to the actual viewpoints M, N, O. As shown in FIG. 11A, if a provisional object O_{K} as viewed from the substitute viewpoint k is positioned parallel to an xy plane, then a provisional object O_{M} used to plot an object as viewed from the actual viewpoint M is arranged so as to eliminate the distance and/or angle between the actual viewpoint M and the substitute viewpoint k.

Similarly, as shown in FIGS. 11B and 11C, a provisional object O_{O} used to plot an object as viewed from the actual viewpoint O is arranged so as to eliminate the distance and/or angle between the actual viewpoint O and the substitute viewpoint k, and as shown in FIG. 11C, a provisional object O_{N} used to plot an object as viewed from the actual viewpoint N is arranged so as to eliminate the distance and/or angle between the actual viewpoint N and the substitute viewpoint k.

The texture image at the selected substitute viewpoint k is mapped onto the provisional objects O_{M}, O_{O}, O_{N} thus arranged, thus plotting these objects. In this manner, the objects as viewed closely from the actual viewpoints can be plotted through simple calculations.

Decision criteria as to whether an object is to be plotted in detail or simply may be based on whether the distance from the viewpoint to the object is smaller than a predetermined distance, the size of the object on the display screen is greater than a certain size, the motion of the object is greater than a certain range, and the object is important for visual effects.

If the decision criterion is based on whether the motion of the object is greater than a certain range, then, as shown in FIG. 2, an automobile running in the other lane 104 is an object to be plotted in detail and a number of automobiles jammed in the lane 102 are objects to be plotted simply.

If the decision criterion is based on whether the distance from the viewpoint to the object is smaller than a predetermined distance, then, as shown in FIG. 3, automobiles displayed on the display screen closely to the viewer, i.e., automobiles in the range A, are objects to be plotted in detail, and automobiles displayed on the display screen away from the viewer, i.e., automobiles in the range B, are objects to be plotted simply.

Some specific means (object group plotting means) for carrying out the above first and second processes will be described below.

The object group plotting means 200A according to the first embodiment of the present invention allows the user to manually enter and generate texture images actually using CAD, and displays the generated texture images on a display monitor with an image plotting means (described later on).

More specifically, in step S11 shown in FIG. 12, the object group plotting means 200A generates images of an object as viewed from arbitrary viewpoints when the object is viewed universally, using CAD or the like.

Alternatively, in step S12, the object group plotting means 200A generates images of an object as viewed from a plurality of viewpoints selected from viewpoints that are actually used, using CAD or the like.

In step S2, the object group plotting means 200A successively writes the generated images (texture images) in the texture area 34a of the image memory 34.

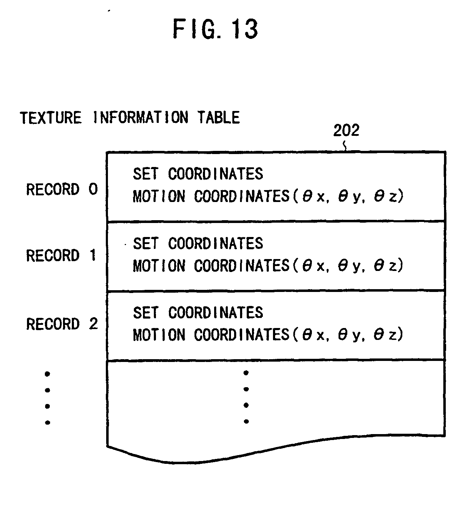

In step S3, the object group plotting means 200A generates a table representing the association between viewpoints and coordinates (set coordinates) written in the texture area 34a, i.e., a texture information table 202 (see FIG. 13).

The viewpoints are stored as converted into motion coordinates of the object. Specifically, the object is moved while each of the viewpoints is being fixed at a reference position, so that the object is seen as if from the present viewpoint. The motion coordinates of the object at this time, i.e., object coordinates that have been moved, particularly, angular displacement data θx, θy, θz, are determined.

As shown in FIG. 13, the texture information table 202 in the texture area 34a stores a plurality of records 0, 1, 2, ··· each comprising set coordinates where a texture image is plotted and the motion coordinates of the object, particularly, angular displacement data θx, θy, θz.

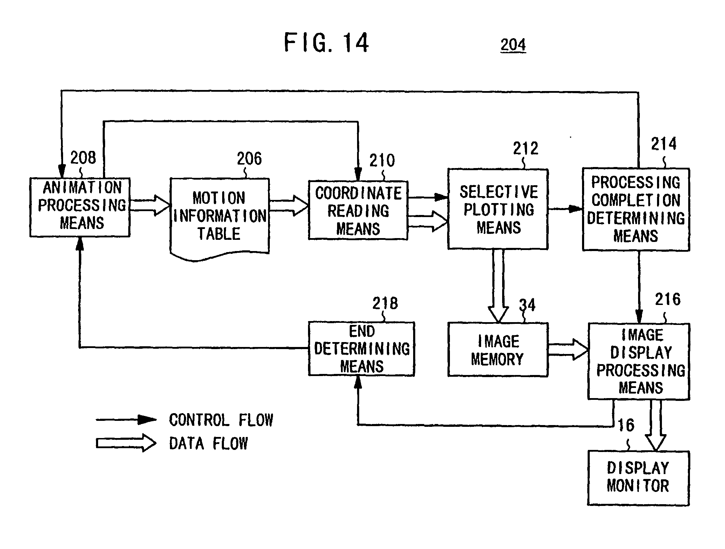

An image plotting means 204 in the object group plotting means 200A according to the first embodiment will be described below with reference to FIGS. 14 through 25.

As shown in FIG. 14, the image plotting means 204 comprises an animation processing means 208 operable by predetermined application software, for successively updating data stored in a motion information table 206 to move the objects according to a predetermined sequence, a coordinate reading means 210 for successively reading motion coordinates from the motion information table 206, a selective plotting means 212 for deciding whether each object is to be plotted according to a normal detailed rendering process or a simpler texture applying process selected based on a predetermined decision criterion, and plotting each object according to the selected process, a processing completion determining means 214 for determining whether the process has been completed with respect to all objects or not, an image display processing means 216 for displaying a group of objects rendered in the image memory 34 on the display unit 16, and an end determining means 218 for determining whether there is a request to end the program or not.

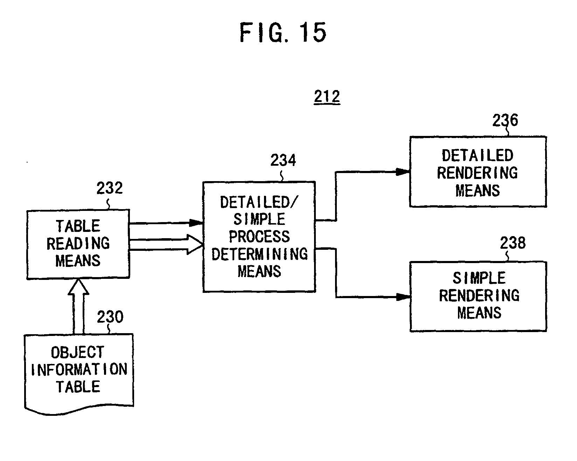

As shown in FIG. 15, the selective plotting means 212 comprises a table reading means 232 for reading information of an object from an object information table 230, a detailed/simple process determining means 234 for determining whether the normal detailed rendering process or the simpler texture applying process is to be performed on the object, a detailed rendering means 236 for plotting the object according to the normal detailed rendering process, and a simple rendering means 238 for plotting the object according to the simpler texture applying process.

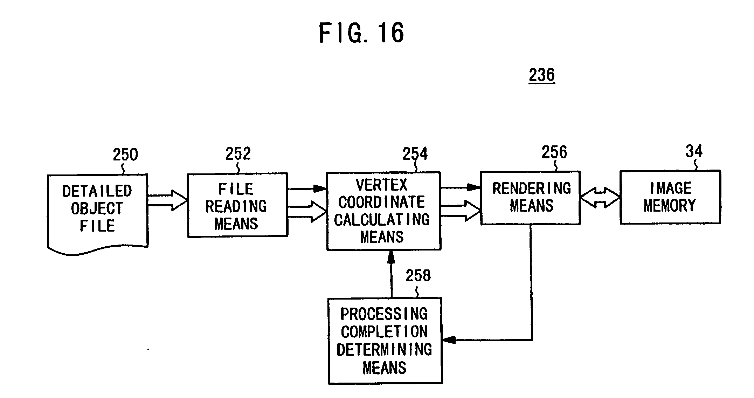

As shown in FIG. 16, the detailed rendering means 236 comprises a file reading means 252 for reading a detailed object file 250, a vertex coordinate calculating means 254 for calculating vertex coordinates of polygons based on the present motion coordinates, a rendering means 256 for performing the normal rendering process, including texture expression and hidden surface removal, on the polygon, and a processing completion determining means 258 for determining whether the rendering process has been completed with respect to all polygons.

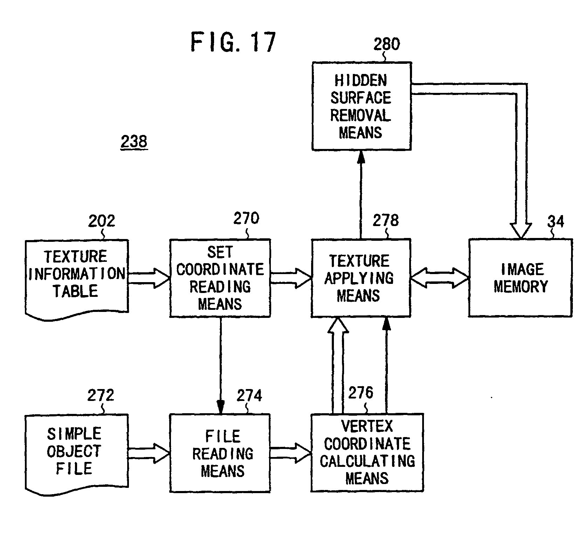

As shown in FIG. 17, the simple rendering means 238 comprises a set coordinate reading means 270 for selecting a record similar to the present motion coordinates (angular displacement data) from the motion coordinates (angular displacement data) registered in the texture information table 202, and reading the set coordinates from the selected record, a file reading means 274 for reading a simple object file 272, a vertex coordinate calculating means 276 for calculating vertex coordinates of polygons based on the present motion coordinates, a texture applying means 278 for applying the texture plotted at the set coordinates to the polygons at an enlarged or reduced scale depending on the display ranges of the polygons, and a hidden surface removal means 280 for performing hidden surface removal.

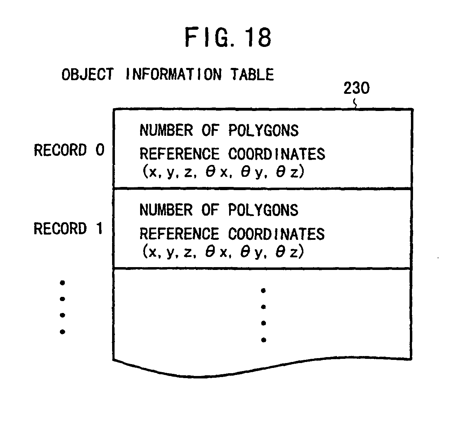

Details of the various tables and files will be described below with reference to FIGS. 18 through 21.

As shown in FIG. 18, the object information table 230 stores information required for each object, i.e., the number of polygons and reference coordinates. The reference coordinates comprise xyz coordinates (x, y, z) at the center (center of gravity) of the object and angular displacements (θx, θy, θz) about the respective axes. Initial values of the angular displacements (θx, θy, θz) are (θx, θy, θz) = (0, 0, 0).

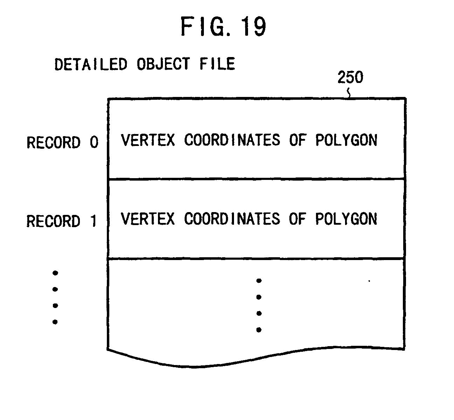

As shown in FIG. 19, the detailed object file 250 stores the vertex coordinates of a number of polygons that make up a normal object. The vertex coordinates are based on the reference coordinates of the normal object.

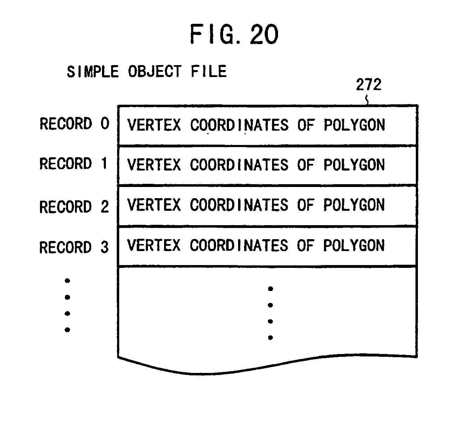

As shown in FIG. 20, the simple object file 272 stores the vertex coordinates of several (1 - 6) polygons that make up a simple object. The vertex coordinates are based on the reference coordinates of the simple object. An object which is made up of several polygons stored in the simple object file 272 may be defined as a provisional object.

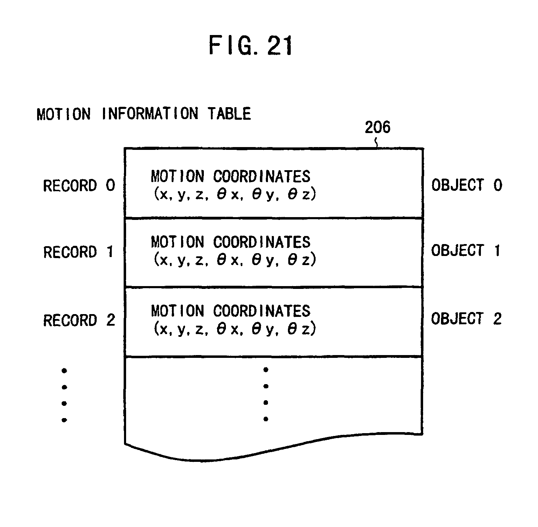

As shown in FIG. 21, the motion information table 206 stores motion coordinates of each object, and is generated by the animation processing means 208. The motion coordinates are representative of how much each object has been displaced and/or rotated from the reference coordinates thereof. Consequently, it is possible to calculate new vertex coordinates of a polygon after being displaced and/or rotated, from the reference coordinates and the motion coordinates of the object and the vertex coordinates of the polygon.

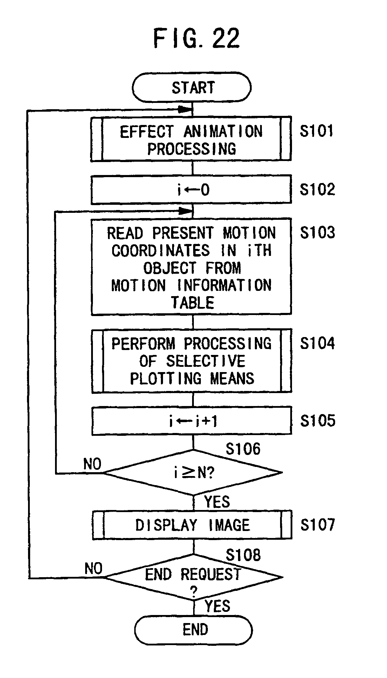

In the image plotting means 204, the animation processing means 208 successively updates the data in the motion information table 206 in order to move an object according to a predetermined sequence in step S101 shown in FIG. 22.

Then, in step S102, the image plotting means 204 stores an initial value "0" in an index register i for searching for an object, thus initializing the index register i.

In step S103, the coordinate reading means 210 reads the present motion coordinates at an ith object from the motion information table 206. Thereafter, in step S104, the selective plotting means 212 performs its processing, i.e., decides whether each object is to be plotted according to the normal detailed rendering process or the simpler texture applying process, and plotting each object according to the selected process. The process of the selective plotting means 212 will be described later on.

In step S105, the image plotting means 204 increments the index register i by + 1. In step S106, the processing completion determining means 214 determines whether the process has been completed with respect to all objects or not, based on whether or not the value of the index register i is equal to or greater than the number N of objects registered in the object information table 230.

If the process has not been completed with respect to all objects, then control goes back to step S103 to decide whether a next object is to be plotted according to the normal detailed rendering process or the simpler texture applying process, and plotting each object according to the selected process.

If the process has been completed with respect to all objects, then control proceeds to step S107 in which the image display processing means 216 displays a group of objects rendered in the rendering area 34b of the image memory 34 on the display unit 16.

In step S108, the end determining means 218 determines whether there is an end request to end the processing of the image plotting means 204 or not. If there is no end request, then control returns to step S101 to selectively plot an object based on motion coordinates updated by the animation processing means 208. If there is an end request, then the processing of the image plotting means 204 comes to an end.

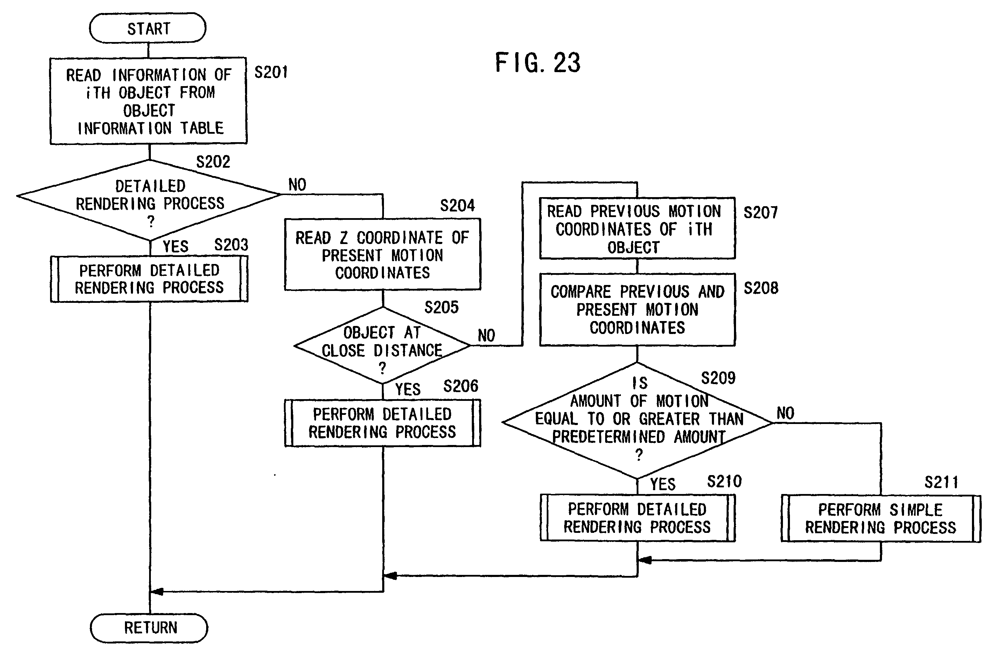

The processing sequence of the selective plotting means 212 will be described below with reference to FIG. 23.

In step S201, the table reading means 232 reads the information of an ith object from the object information table 230.

In step S202, the detailed/simple process determining means 234 determines whether the normal detailed rendering process or the simpler texture applying process is to be performed on the object, based on the information on detailed plotting that is registered in the object information table 230 which has been read.

Specifically, if detailed plotting is necessary for the object for the reason of visual effects or the like, then the information on necessary detailed plotting is registered in the object information table 230.

If the registered information contains a positive description on detailed plotting with respect to the object, then control proceeds to step S203 in which the detailed rendering means 236 performs a detailed rendering process. Specific details of the detailed rendering process will be described later on.

If the registered information does not contain a positive description on detailed plotting with respect to the object, then control goes to step S204 in which the detailed/simple process determining means 234 reads a Z coordinate of the present motion coordinates. The detailed/simple process determining means 234 then determines whether the object is at a close distance or not in step S205, based on whether the Z coordinate is smaller than a preset coordinate or not.

If the object is at a close distance, then the detailed rendering means 236 performs the detailed rendering process in step S206. If the object is at a far distance, then control goes to step S207.

In step S207, the detailed/simple process determining means 234 reads the previous motion coordinates of the ith object. In step S208, the detailed/simple process determining means 234 compares the previous motion coordinates with the present motion coordinates. In step S209, the detailed/simple process determining means 234 determines whether or not the amount of motion of the object is equal to or greater than a predetermined amount.

If the amount of motion of the object is equal to or greater than the predetermined amount, i.e., if the motion of the object is large, then the detailed rendering means 236 performs the detailed rendering process in step S210. If the motion of the object is small or the object is held at rest, then the simple rendering means 238 performs the simpler texture applying process in step S211.

When the detailed rendering process is finished in step S203, step S206, or step S210, or when the simpler texture applying process is finished in step S211, the processing sequence of the selective plotting means 212 comes to an end.

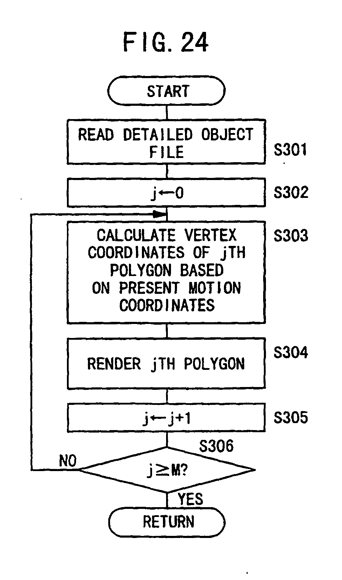

A processing sequence, i.e., the detailed rendering process, of the detailed rendering means 236 will be described below with reference to FIG. 24.

In step S301, the file reading means 252 reads the detailed object file 250. Thereafter, the detailed rendering means 236 stores "0" in an index register j for searching for a polygon, thus initializing the index register j in step S302.

In step S303, the vertex coordinate calculating means 254 calculates vertex coordinates of a jth polygon based on the present motion coordinates. Thereafter, the rendering means 256 performs the normal rendering process, including texture expression and hidden surface removal, on the jth polygon, and renders the polygon at a predetermined location in the rendering area 34b of the image memory 34 in step S304.

Then, in step S305, the detailed rendering means 236 increments the index register j by + 1. In step S306, the processing completion determining means 258 determines whether the process has been completed with respect to all objects or not, based on whether or not the value of the index register j is equal to or greater than the number M of polygons contained in the object.

If the process has not been completed with respect to all polygons, then control goes back to step S303 to calculate vertex coordinates of a next polygon and performs the normal rendering process on the next polygon. If the process has been completed with respect to all polygons, then the processing sequence of the detailed rendering means 236 is brought to an end.

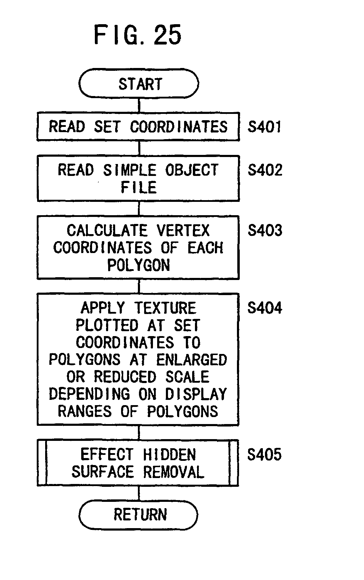

A processing sequence, i.e., the simple rendering process, of the simple rendering means 238 will be described below with reference to FIG. 25.

In step S401, the set coordinate reading means 270 selects a record similar to the present motion coordinates (angular displacement data) from the motion coordinates (angular displacement data) registered in the texture information table 202, and reads the set coordinates from the selected record.

In step S402, the file reading means 274 reads the simple object file 272. Thereafter, in step S403, the vertex coordinate calculating means 276 calculates vertex coordinates of all polygons registered in the simple object file 272 based on the present motion coordinates.

In step S404, the texture applying means 278 applies the texture image plotted at the set coordinates in the texture area 34a of the image memory 34 to the polygons at an enlarged or reduced scale depending on the display ranges of the polygons (rendering of the polygons in the rendering area 34b).

Thereafter, in step S405, the hidden surface removal means 280 performs hidden surface removal. The processing sequence of the simple rendering means 238 now comes to an end.

As described above, with the object group plotting means 200A according to the first embodiment, the user manually enters a plurality of texture images of an object as viewed from various viewpoints.

Thereafter, when the image plotting means 204 is to plot a plurality of identical objects, the detailed rendering means 236 performs the normal rendering process on those objects which are to be plotted in detail according to the predetermined decision criterion in the selective plotting means 212, and the simple rendering means 238 selects a texture image depending on the direction to be plotted from the generated texture images and applies the texture image to those objects which are to be plotted simply according to the predetermined decision criterion in the selective plotting means 212.

Consequently, the object group plotting means 200A according to the first embodiment performs the detailed rendering process on certain ones of a number of objects, i.e., visually attractive objects, moving objects, nearby objects, etc., and simply applies a texture to other objects, so that the period of time required to make calculations and plot the objects can greatly be reduced, and the objects can be plotted of high quality.

The decision process carried out by the selective plotting means 212 may be modified as follows:
(1) The detailed rendering process is performed on only those objects with respect to which there is a positive description on detailed plotting registered in the object information table 230.
(2) The detailed rendering process is performed on those objects with respect to which there is a positive description on detailed plotting in the object information table 230 or those objects whose motion is large.
(3) The detailed rendering process is performed on those objects with respect to which there is a positive description on detailed plotting in the object information table 230, those objects which are at a close distance, or those objects whose motion is large.
(4) The detailed rendering process is performed on those objects with respect to which there is a positive description on detailed plotting in the object information table 230 or those objects which are at a close distance.
(5) The detailed rendering process is performed on only those objects whose motion is large.
(6) The detailed rendering process is performed on those objects which are at a close distance or those objects whose motion is large.
(7) The detailed rendering process is performed on only those objects which are at a close distance.

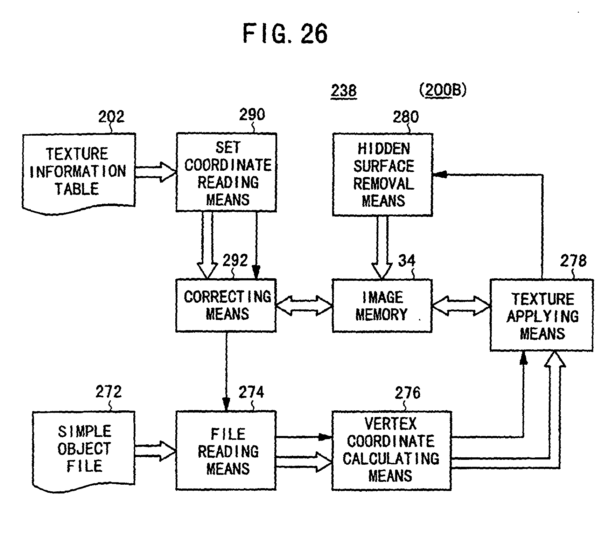

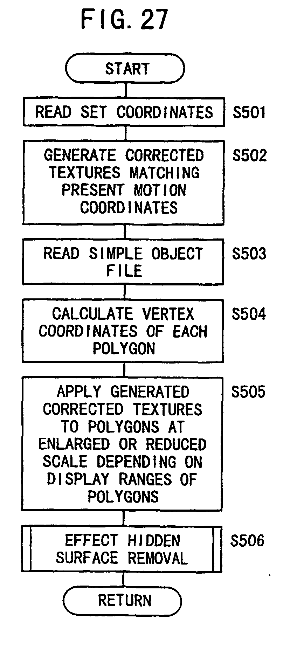

An object group plotting means 200B according to a second embodiment of the present invention will be described below with reference to FIGS. 26 and 27.

The object group plotting means 200B according to the second embodiment is of substantially the same arrangement as the object group plotting means 200A according to the first embodiment, but differs therefrom as to the arrangement and processing sequence of the simple rendering means 238 as follows:

As shown in FIG. 26, the simple rendering means 238 has a set coordinate reading means 290 for selecting forward and backward records similar to the present motion coordinates (angular displacement data) from the motion coordinates (angular displacement data) registered in the texture information table 202, and reading two set coordinates from the selected record, a correcting means 292 for performing an interpolating process based on the present motion coordinates and generating a corrected texture matching the present motion coordinates, the file reading means 274 for reading the simple object file 272, the vertex coordinate calculating means 276 for calculating vertex coordinates of polygons based on the present motion coordinates, the texture applying means 278 for applying the corrected texture to the polygons at an enlarged or reduced scale depending on the display ranges of the polygons, and the hidden surface removal means 280 for performing hidden surface removal.

A processing sequence, i.e., the simple rendering process, of the simple rendering means 238 shown in FIG. 26 will be described below with reference to FIG. 27.

In step S501, the set coordinate reading means 290 selects forward and backward records similar to the present motion coordinates (angular displacement data) from the motion coordinates (angular displacement data) registered in the texture information table 202, and reads the set coordinates from the selected records.

In step S502, the correcting means 292 interpolates the two textures plotted at the set coordinates based on the present motion coordinates, and generates corrected textures matching the present motion coordinates.

In step S503, the file reading means 274 reads the simple object file 272. Thereafter, in step S504, the vertex coordinate calculating means 276 calculates vertex coordinates of polygons based on the present motion coordinates.

In step S505, the texture applying means 278 applies the corrected textures to the polygons at an enlarged or reduced scale depending on the display ranges of the polygons (rendering of the polygons in the rendering area 34b).

Thereafter, in step S506, the hidden surface removal means 280 performs hidden surface removal. The processing sequence of the simple rendering means 238 now comes to an end.

As described above, with the object group plotting means 200B according to the second embodiment, the correcting means 292 interpolates the two textures similar to the present motion coordinates based on the present motion coordinates, and generates corrected textures matching the present motion coordinates. Therefore, the object group plotting means 200B can appropriately handle objects expressed in various patterns, and can express natural motions in expressing a number of objects such as a school of fish.

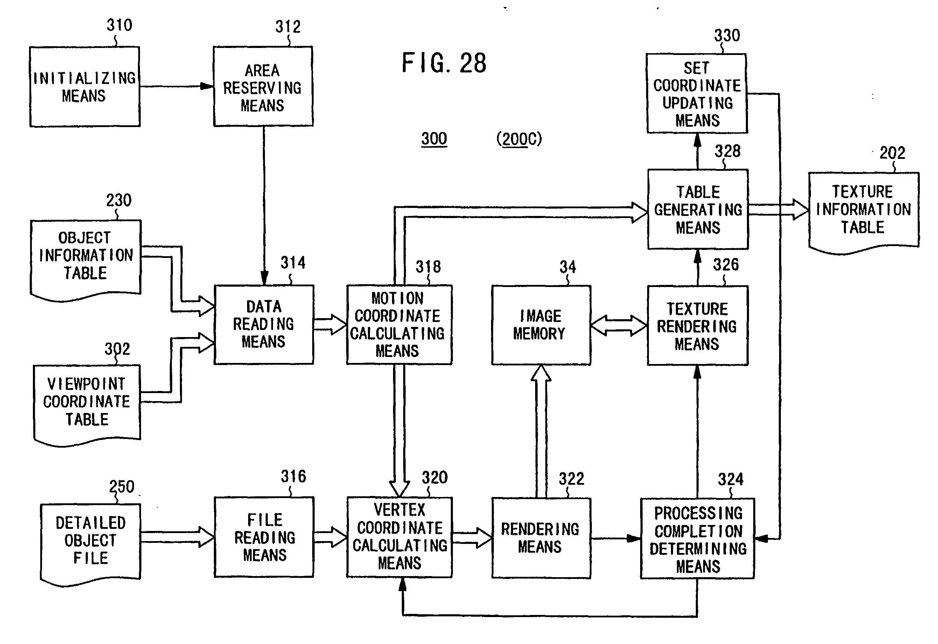

An object group plotting means 200C according to a third embodiment of the present invention will be described below with reference to FIGS. 28 through 35.

The object group plotting means 200C according to the third embodiment is of substantially the same arrangement and performs substantially the same processing sequence as the object group plotting means 200A according to the first embodiment, but differs therefrom in that first texture images are automatically generated by a texture setting means 300, not manually by the user. The other means of the object group plotting means 200C, i.e., the image plotting means 204, the selective plotting means 212, the detailed rendering means 236, and the simple rendering means 238 have the same arrangement and processing sequence as those of the object group plotting means 200A according to the first embodiment.

An arrangement and processing sequence of the texture setting means 300 will be described below with reference to FIGS. 28 through 35.

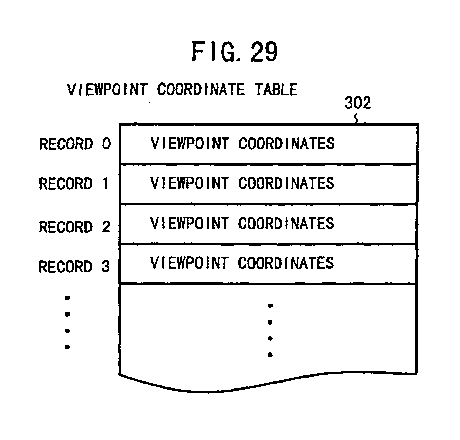

The texture setting means 300 employs a viewpoint coordinate table 302. As shown in FIG. 29, the viewpoint coordinate table 302 is a table for obtaining images of an object as viewed from a number of viewpoints, and stores the coordinates of a plurality of viewpoints (substitute viewpoints) that are selected as representative viewpoints.

As shown in FIG. 28, the texture setting means 300 comprises an initializing means 310 for defining the number of viewpoints and reference viewpoint coordinates and initializing set coordinates, an area reserving means 312 for reserving two areas, i.e., an area Z1 for placing textures depending on a plurality of viewpoints and an area Z2 for actual texture mapping, in the texture area 34a of the image memory 34, a data reading means 314 for reading at least the number of polygons and reference coordinates from the object information table 230 and successively reading viewpoint coordinates from the viewpoint coordinate table 302, and a file reading means 316 for reading the detailed object file 250.

The texture setting means 300 also has a motion coordinate calculating means 318 for determining motion coordinates with respect to reference coordinates of an object when viewpoint coordinates are used as a reference, a vertex coordinate calculating means 320 for calculating vertex coordinates of polygons making up an object based on the motion coordinates, a rendering means 322 for performing a rendering process, including texture expression and hidden surface removal on polygons (rendering in the rendering area 34b), a processing completion determining means 324 for determining whether the processing of a loop is completed or not, a texture rendering means 326 for rendering the textures in the rendering area 34b again at the set coordinates in the texture area Z1, a table generating means 328 for storing set coordinates and motion coordinates in the corresponding record in the texture information table 202, and a set coordinate updating means 330 for updating set coordinates.

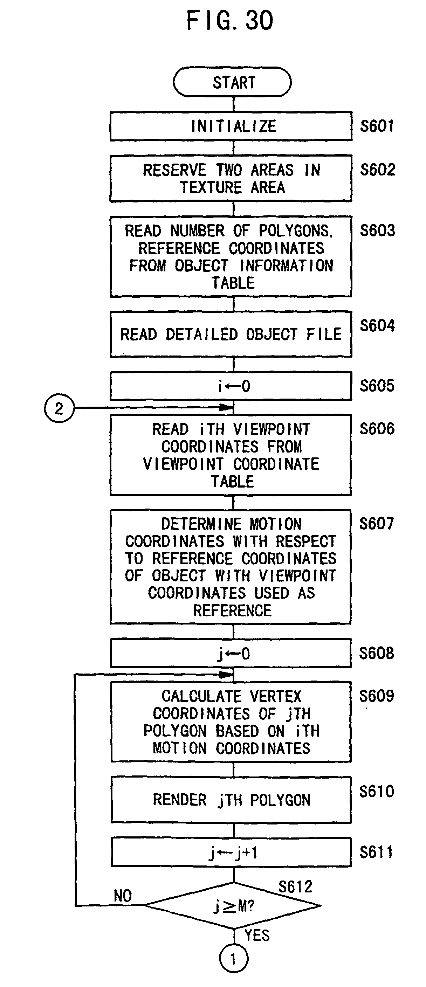

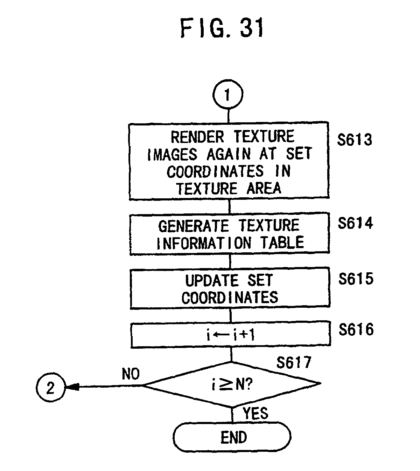

A processing sequence of the texture setting means 300 will be described below with reference to FIGS. 30 and 31.

In step S601 shown in FIG. 30, the initializing means 310 initializes various parameters.

Then, in step S602, the area reserving means 312 reserves two areas, i.e., an area Z1 for placing textures depending on a plurality of viewpoints and an area Z2 for actual texture mapping, in the texture area 34a of the image memory 34.

In step S603, the data reading means 314 reads at least the number of polygons and reference coordinates from the object information table 230. Thereafter, in step S604, the file reading means 316 reads the detailed object file 250.

In step S605, the texture setting means 300 stores an initial value "0" in an index register i used for searching for a viewpoint, thus initializing the index register i.

In step S606, the data reading means 314 reads ith viewpoint coordinates from the viewpoint coordinate table 302. The viewpoint coordinate table 302 stores viewpoints including arbitrary viewpoints (substitute viewpoints) from which an object is viewed universally and a plurality of viewpoints (substitute viewpoints) selected from viewpoints that are used actually.

In step S607, the motion coordinate calculating means 318 determines motion coordinates with respect to reference coordinates of an object when viewpoint coordinates are used as a reference. Specifically, the object is moved while each of the viewpoints is being fixed at a reference position, so that the object is seen as if from the present viewpoint. The motion coordinates of the object at this time, i.e., object coordinates that have been moved, particularly, angular displacement data θx, θy, θz, are determined. The motion coordinates thus determined are defined as motion coordinates based on the ith viewpoint coordinates, i.e., ith motion coordinates.

In step S608, the texture setting means 300 stores "0" in an index register j for searching for a polygon, thus initializing the index register j.

In step S609, the vertex coordinate calculating means 320 calculates vertex coordinates of a jth polygon making up the object based on the ith motion coordinates.

Thereafter, the rendering means 322 performs the normal rendering process, including texture expression and hidden surface removal, on the jth polygon, and renders the polygon in the rendering area 34b of the image memory 34 in step S610.

Then, in step S611, the texture setting means 300 increments the index register j by + 1. In step S612, the processing completion determining means 324 determines whether the process has been completed with respect to all objects or not, based on whether or not the value of the index register j is equal to or greater than the number M of polygons contained in the object.

If the process has not been completed with respect to all polygons, then control goes back to step S609 to perform the rendering process on a next polygon. If the process has been completed with respect to all polygons, then control goes to step S613 shown in FIG. 31. In step S613, the texture rendering means 326 renders the texture images rendered in the rendering area 34b again at the set coordinates in the texture area Z1.

In step S614, the table generating means 328 generates the texture information table 202. Specifically, the table generating means 328 stores set coordinates and motion coordinates where a texture is rendered in the ith record in the texture information table 202.

In step S615, the set coordinate updating means 330 updates the set coordinates. In step S616, the texture setting means 300 increments the index register i by + 1. In step S617, the processing completion determining means 324 determines whether the texture rendering process with respect to all viewpoints registered in the viewpoint coordinate table 302 has been completed or not, based on whether or not the value of the index register i is equal to or greater than the number A of viewpoints registered in the viewpoint coordinate table 302.

If the texture rendering process with respect to all viewpoints has not been completed, then control goes back to step S606 shown in FIG. 30 to perform the texture rendering process on a next viewpoint. If the texture rendering process with respect to all viewpoints has been completed, then the processing sequence of the texture setting means 300 is ended.

In the object group plotting means 200C according to the third embodiment, since the texture setting means 300 can automatically generate texture images, texture images can be generated efficiently to allow objects to be corrected and added quickly.

With the object group plotting means 200C according to the third embodiment, as with the object group plotting means 200B according to the second embodiment, the simple rendering means 238 of the image plotting means 204 may incorporate the correcting means 292.

In the above embodiments, it is assumed that an object is composed of a single constituent. However, a plurality of plotting units that make up an object vary randomly or simultaneously with time, so that the object itself changes.

To handle such a situation, according to the present embodiment, a plurality of texture images as a combination of those produced when the object is viewed from various viewpoints and those produced when the object changes variously are generated, and, for plotting a plurality of identical objects, the normal rendering process is performed on those objects which are to plotted in detailed according to a predetermined decision criterion, and a texture image is selected depending on the direction and the deformation to be plotted from the generated texture images and the selected texture image is used as a texture for those objects which are to be plotted simply.

Specifically, it is assumed that one object comprises a single main object and one or more auxiliary objects attached to the main object, like a fish or a human being. For example, a fish has a body as a main object and a tail fin as an auxiliary object, and a human being has a torso as a main object and a head and legs and arms as auxiliary objects.

If one object comprises a single main object and one or more auxiliary objects attached to the main object, then texture images need to be viewed from various viewpoints and, additionally, deformations of the auxiliary objects need to be taken into account.

Ideally, it is necessary to prepare texture images by assuming various deformations of an auxiliary object with respect to one viewpoint. However, a large amount of data would be involved to meet such a requirement. Therefore, with respect to a main object, the processing sequences of the object group plotting means 200A - 200C according to the first through third embodiments are carried out, and with respect to an auxiliary object, a representative deformation pattern, e.g., a highly frequent deformation pattern or a visually attractive deformation pattern, is searched for, and reflected in a texture image.

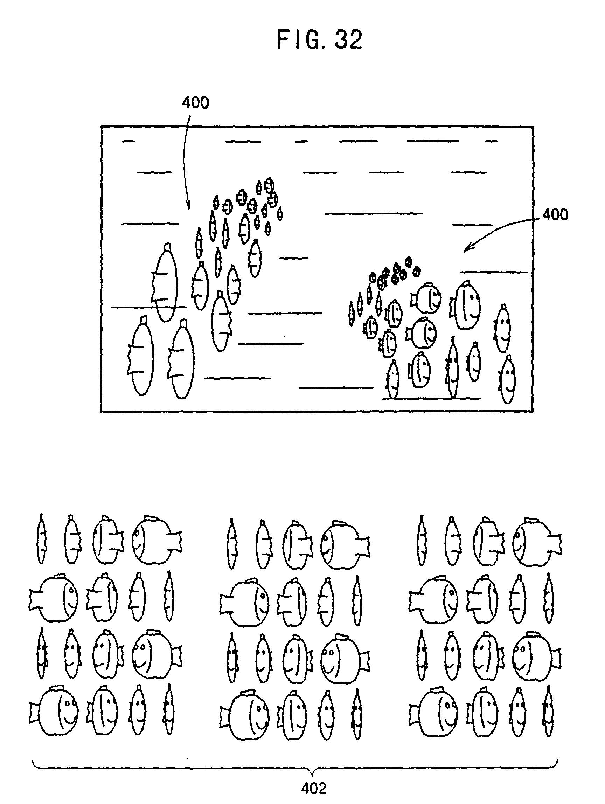

FIG. 32 shows an example of representative texture images 402 prepared for plotting schools 400 of fish. The texture images 402 comprise textures of main objects (bodies) as viewed from arbitrary viewpoints in combination with several deformation patterns of auxiliary objects (tail fins). For actually plotting objects, the normal rendering process is performed on those objects to be plotted in detail, and texture images close to the orientation of the main objects and deformation of auxiliary objects are selected and applied to those objects to be plotted simply.

Embodiments in which one object comprises a main object and one or more auxiliary objects will be described below.

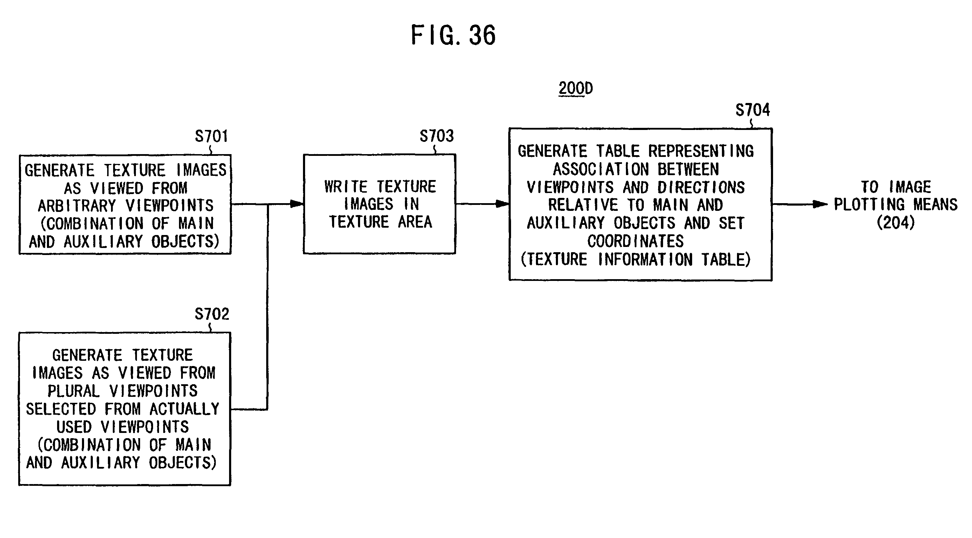

If one object comprises a main object and one or more auxiliary objects attached to the main object, then an object group plotting means 200D (see FIG. 36) according to a fourth embodiment of the present invention generates a plurality of texture images comprising a combination of images of the main object as viewed from various viewpoints and images of the auxiliary objects as they have moved in various directions, and, for plotting a plurality of identical objects, effects a normal rendering process on those objects which are to be plotted in detail according to a predetermined decision criterion, and selects a texture image depending on the direction and the deformation to be plotted from the generated texture images and uses the selected texture image as a texture for those objects which are to be plotted simply.

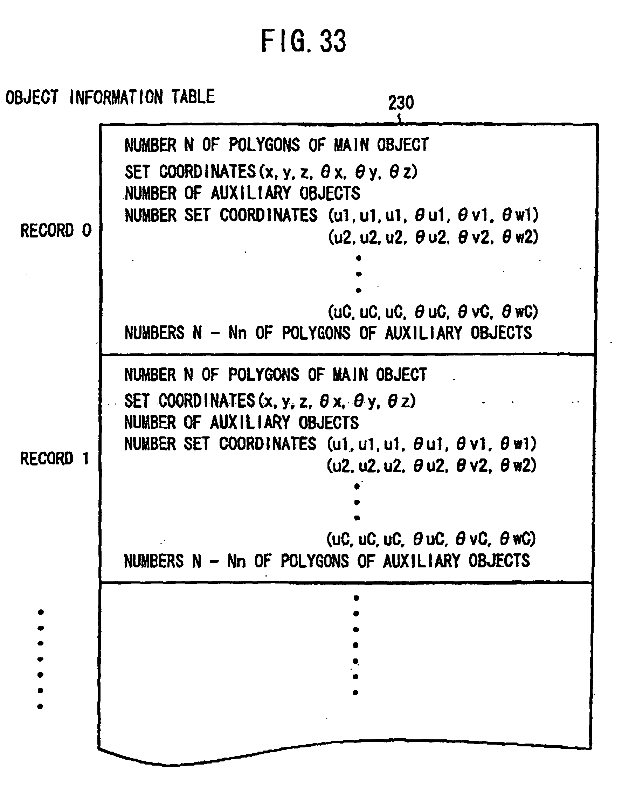

Since one object comprises a main object and one or more auxiliary objects, the object information table 230 in the object group plotting means 200D according to the fourth embodiment stores, as shown in FIG. 33, information required for each object, i.e., the number of polygons and reference coordinates of the main object, the number C of the auxiliary objects, the reference normal coordinates of each of the auxiliary objects, and the numbers N1 - Nn of polygons of the auxiliary objects.

The reference normal coordinates comprise xyz coordinates (x, y, z) of the junction of the auxiliary object to the main object, an angular displacement θu about the normal to the junction, and angular displacements θv, θw about respective two axes perpendicular to the normal. Initial values of the angular displacements (θu, θv, θw) are (θu, θv, θw) = (0, 0, 0).

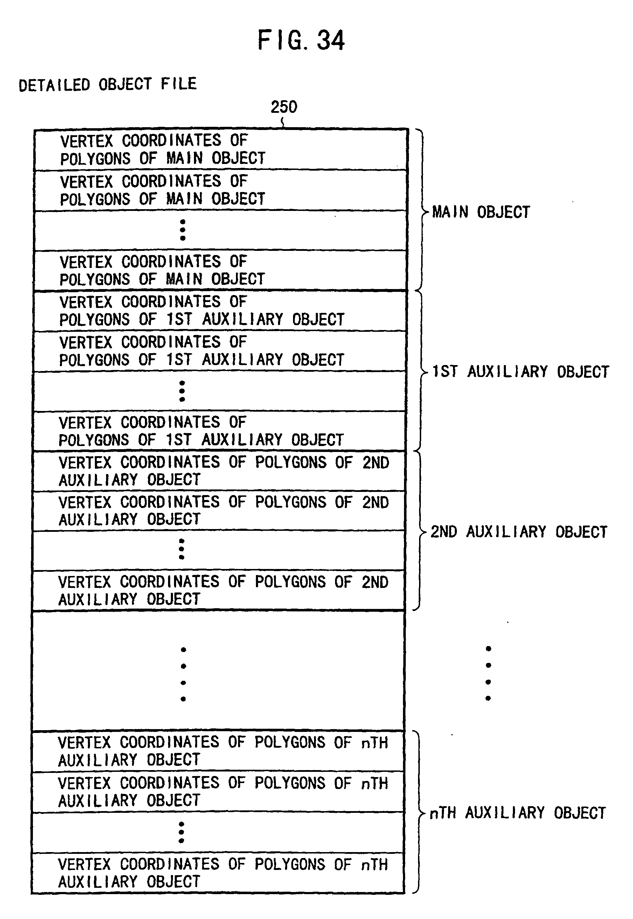

As shown in FIG. 34, the detailed object file 250 stores the vertex coordinates of a number of polygons that make up a normal main object and the vertex coordinates of a number of polygons that make up a normal auxiliary object. The vertex coordinates are based on the reference coordinates of the object.

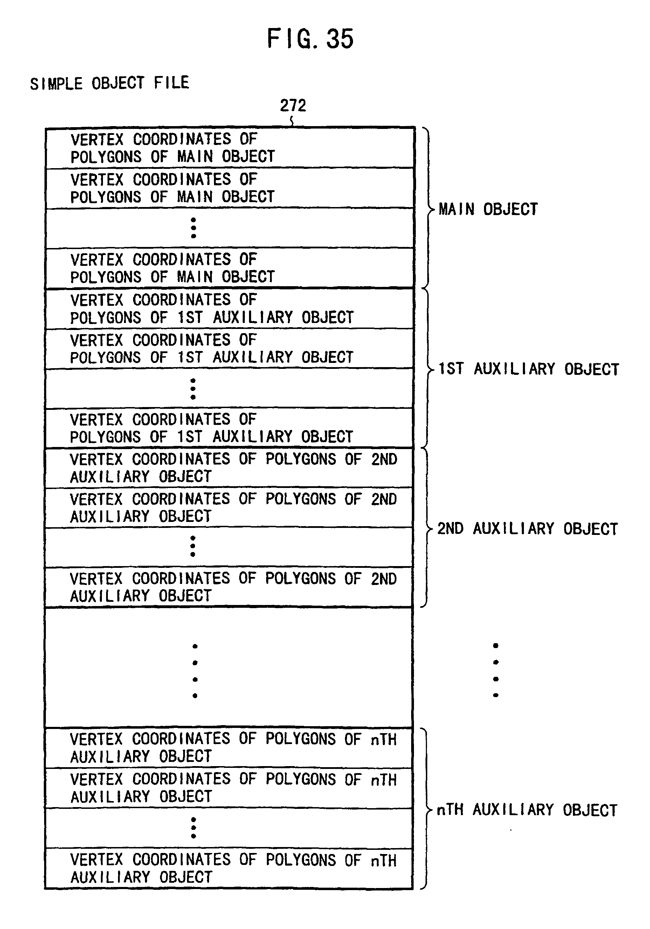

As shown in FIG. 35, the simple object file 272 stores the vertex coordinates of several (1 - 6) polygons that make up a simple main object and the vertex coordinates of several (1 - 3) polygons that make up a simple auxiliary object. The vertex coordinates are based on the reference coordinates of the simple object.

The viewpoint coordinate table 302 is of details as shown in FIG. 29. The viewpoint coordinate table 302 is a table for obtaining images of an object as viewed from a number of viewpoints, and stores the coordinates of a plurality of viewpoints (substitute viewpoints) that are selected as representative viewpoints.

The object group plotting means 200D according to the fourth embodiment of the present invention allows the user to manually enter and generate texture images actually using CAD, and displays the generated texture images on a display monitor with an image plotting means (described later on).

More specifically, in step S701 shown in FIG. 36, the object group plotting means 200D generates images of an object as viewed from arbitrary viewpoints, using CAD or the like. At this time, the object group plotting means 200D generates a combination of images of a main object as viewed from arbitrary viewpoints and images of an auxiliary object attached to the main object as the auxiliary object moves in various directions.

Alternatively, in step S702, the object group plotting means 200D generates images of an object as viewed from a plurality of viewpoints selected from viewpoints that are actually used, using CAD or the like. At this time, the object group plotting means 200D generates a combination of images of a main object as viewed from arbitrary viewpoints and images of an auxiliary object attached to the main object as the auxiliary object moves in various directions.

In step S703, the object group plotting means 200D successively writes the generated images (texture images) in the texture area 34a of the image memory 34.

In step S704, the object group plotting means 200D generates a table representing the association between viewpoints with respect to the main object and the direction of the auxiliary object and coordinates (set coordinates) written in the texture area 34a, i.e., a texture information table 202.

The viewpoints with respect to the main object are stored as converted into motion coordinates (angular displacement data θx, θy, θz) of the main object, and the direction of the auxiliary object is stored as converted into motion coordinates (angular displacement data θu, θv, θw) of the auxiliary object.

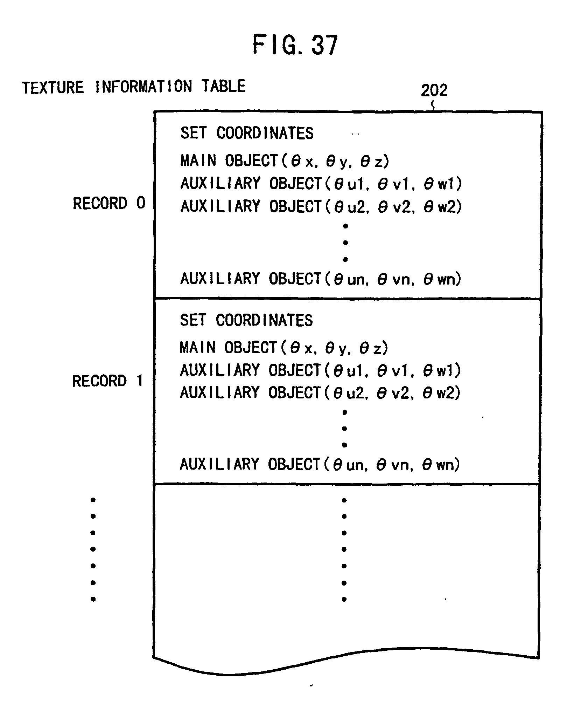

As shown in FIG. 37, the texture information table 202 stores a plurality of records 0, 1, ··· each comprising set coordinates where a texture image is plotted, the motion coordinates of the main object, particularly, angular displacement data θx, θy, θz, and the motion coordinates of the 1st through nth auxiliary objects, particularly, angular displacement data (θu1, θv1, θw1), (θu2, θv2, θw2), ··· (θun, θvn, θwn).

The image plotting means 204, the selective plotting means 212, the detailed rendering means 236, and the simple rendering means 238 perform substantially the same processing sequence as those of the object group plotting means 200A according to the first embodiment, except that motion coordinates are searched for or approximately searched for based on a combination of the motion coordinates of the main object and the motion coordinates of the auxiliary objects.

The image plotting means 204 successively updates the data in the motion information table 206 in order to move an object according to a predetermined sequence, and determines whether each object is to be rendered according to the normal rendering process or by simply applying textures, and renders the object.

Those objects which are to be plotted in detail are subjected to the normal rendering process by the detailed rendering means 236.

Those objects which are to be plotted simply are processed by the simple rendering means 238 as follows: The simple rendering means 238 selects a record similar to the present motion coordinates (angular displacement data of the main object and angular displacement data of the 1st through nth auxiliary objects) from the motion coordinates (angular displacement data of the main object and angular displacement data of the 1st through nth auxiliary objects) registered in the texture information table 202, and reads the set coordinates from the selected record.

After having read the simple object file 272, the simple rendering means 238 calculates vertex coordinates of polygons registered in the simple object file 272 based on the present motion coordinates, and applies the texture plotted at the set coordinates in the texture area 34a of the image memory 34 to the polygons at an enlarged or reduced scale depending on the display ranges of the polygons (rendering of the polygons in the rendering area 34b).

With the object group plotting means 200D according to the fourth embodiment, as with the object group plotting means 200B according to the second embodiment, the simple rendering means 238 of the image plotting means 204 may incorporate the correcting means 292.

Consequently, as with the object group plotting means 200A according to the first embodiment, the object group plotting means 200D according to the fourth embodiment performs the detailed rendering process on certain ones of a number of objects, i.e., visually attractive objects, moving objects, nearby objects, etc., and simply applies a texture to other objects, so that the period of time required to make calculations and plot the objects can greatly be reduced, and the objects can be plotted of high quality.

The object group plotting means 200D according to the fourth embodiment can be applied to objects which have complex shapes and comprise components that change variously.

According to the fourth embodiment, more specifically, if an object comprises a main object and one or more auxiliary objects attached to the main object, then the object group plotting means 200D generates a plurality of texture images comprising a combination of images of the main object as viewed from various viewpoints and images of the auxiliary objects as they have moved in various directions, and, for plotting a plurality of identical objects, effects the normal rendering process on those objects which are to be plotted in detail according to a predetermined decision criterion, and selects a texture image depending on the direction and the deformation to be plotted from the generated texture images and uses the selected texture image as a texture for those objects which are to be plotted simply.

Inasmuch as a plurality of texture images based on a combination of images representing not only the direction of objects but also the deformations of auxiliary objects are prepared, the principles of the fourth embodiment are applicable to a situation where a number of fishes are oriented in various directions and components thereof, e.g., tail fins and dorsal fins, change in a complex manner.

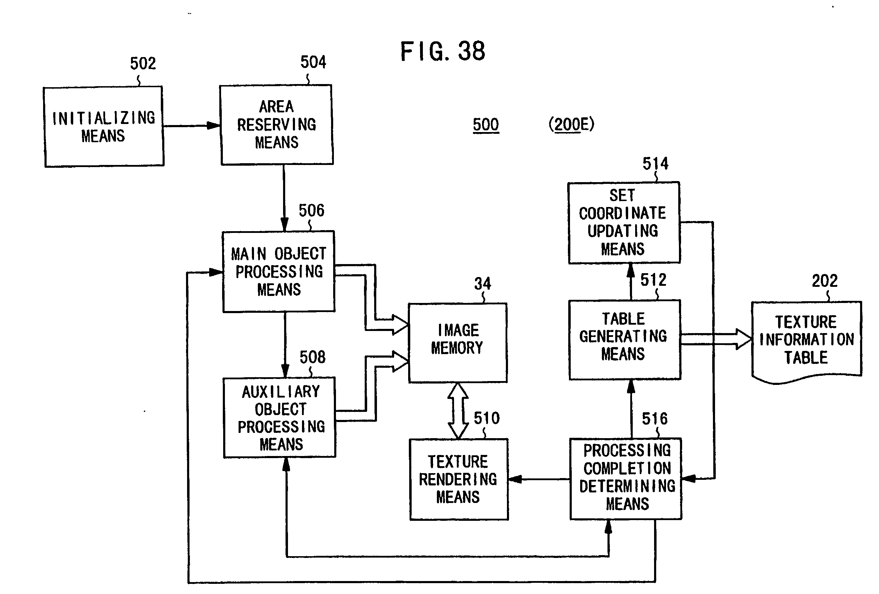

An object group plotting means 200E according to a fifth embodiment of the present invention will be described below with reference to FIGS. 38 through 45.

The object group plotting means 200E according to the fifth embodiment is of substantially the same arrangement and performs substantially the same processing sequence as the object group plotting means 200D according to the fourth embodiment, but differs therefrom in that first texture images are automatically generated by a texture setting means 500, not manually by the user. The other means of the object group plotting means 200E, i.e., the image plotting means 204, the selective plotting means 212, the detailed rendering means 236, and the simple rendering means 238 have the same arrangement and processing sequence as those of the object group plotting means 200D according to the fourth embodiment.

An arrangement and processing sequence of the texture setting means 500 will be described below with reference to FIGS. 38 through 45.

As shown in FIG. 38, the texture setting means 500 comprises an initializing means 502 for defining the number of viewpoints and reference viewpoint coordinates and initializing set coordinates, an area reserving means 504 for reserving two areas, i.e., an area Z1 for placing textures depending on a plurality of viewpoints and an area Z2 for actual texture mapping, in the texture area 34a of the image memory 34, a main object processing means 506 for generating textures relative to main objects, an auxiliary object processing means 508 for generating textures relative to auxiliary objects, a texture rendering means 510 for rendering the textures in the rendering area 34b again at the set coordinates in the texture area Z1, a table generating means 512 for storing set coordinates and motion coordinates in the corresponding record in the texture information table 202, a set coordinate updating means 514 for updating set coordinates, and a processing completion determining means 516 for determining whether the processing of a loop is completed or not.

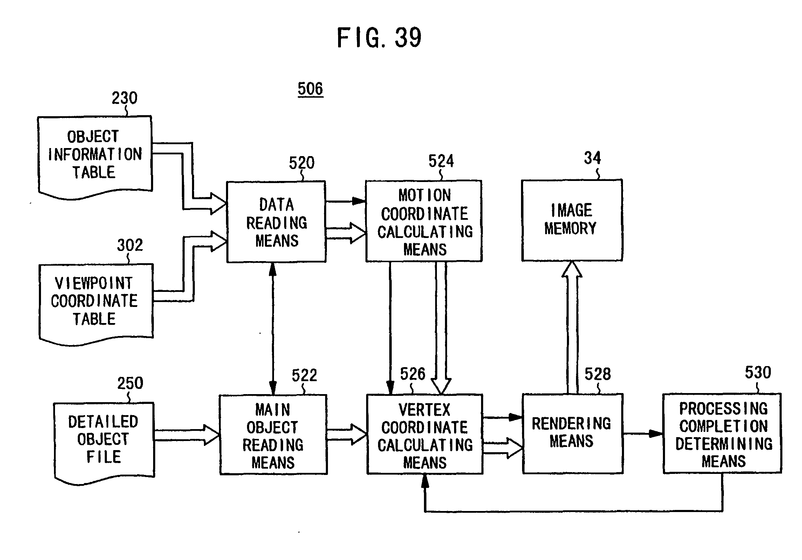

As shown in FIG. 39, the main object processing means 506 comprises a data reading means 520 for reading at least the number of polygons and reference coordinates in the main object from the object information table 230 and reading viewpoint coordinates from the viewpoint coordinate table 302, a main object reading means 522 for reading data of the main object from the detailed object file 250, a motion coordinate calculating means 524 for determining motion coordinates with respect to reference coordinates of the main object when viewpoint coordinates are used as a reference, a vertex coordinate calculating means 526 for calculating vertex coordinates of polygons making up the main object, a rendering means 528 for performing a rendering process, including texture expression and hidden surface removal, on polygons (rendering in the rendering area 34b), and a processing completion determining means 530 for determining whether the processing of a loop is completed or not.

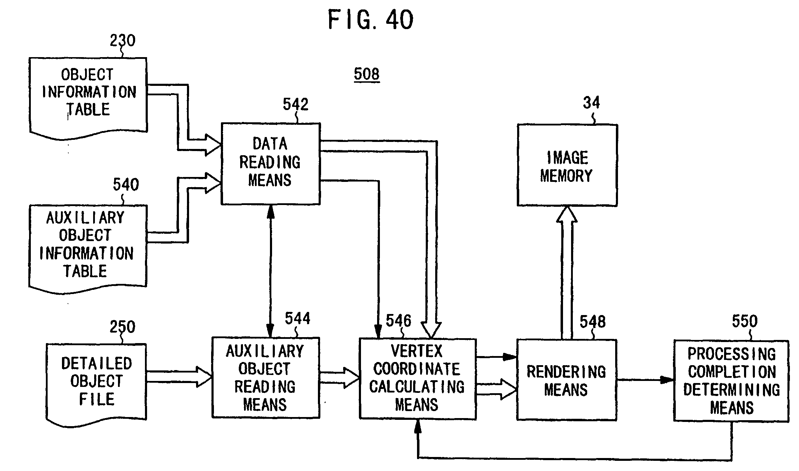

As shown in FIG. 40, the auxiliary object processing means 508 comprises a data reading means 542 for reading at least the number of polygons and reference coordinates in the main object from the object information table 230 and reading motion coordinates for auxiliary objects from an auxiliary object information table 540, an auxiliary object reading means 544 for reading data of the auxiliary objects from the detailed object file 250, a vertex coordinate calculating means 546 for calculating vertex coordinates of polygons making up the auxiliary objects, a rendering means 548 for performing a rendering process, including texture expression and hidden surface removal, on polygons (rendering in the rendering area 34b), and a processing completion determining means 550 for determining whether the processing of a loop is completed or not.

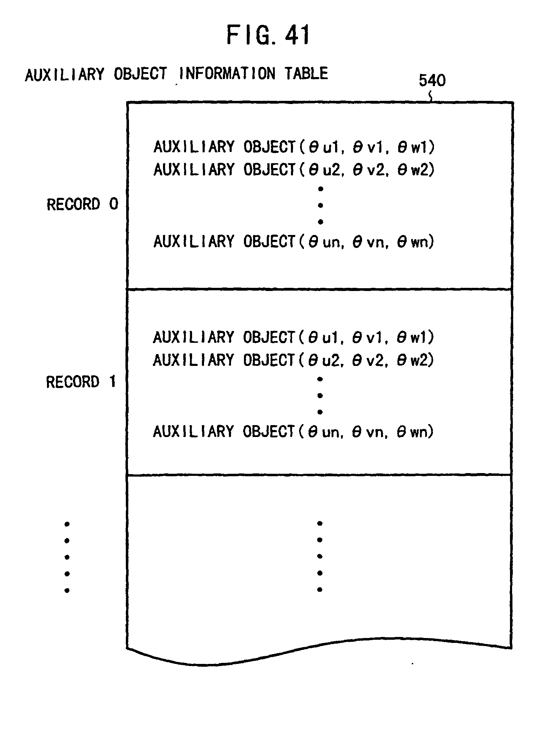

As shown in FIG. 41, the auxiliary object information table 540 stores a plurality of records 0, 1, ··· each comprising motion coordinates, particularly angular displacement data θu, θv, θw, relative to a typical deformation pattern of an auxiliary object.

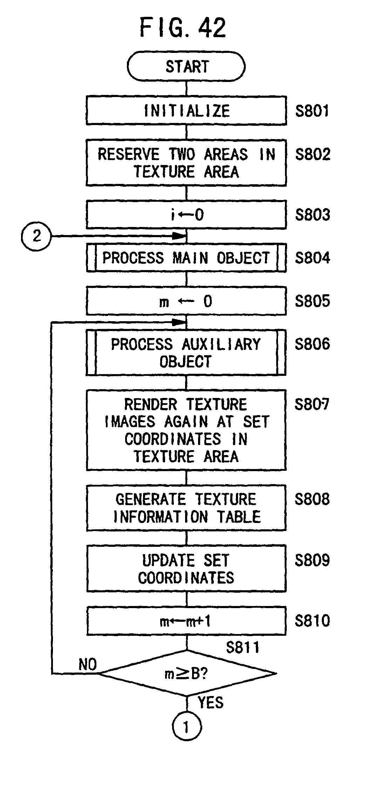

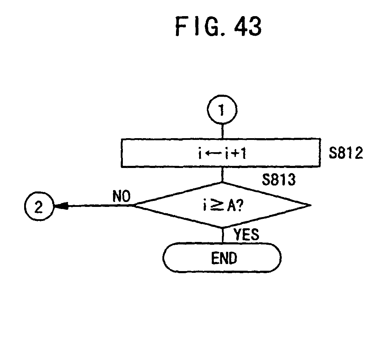

A processing sequence of the texture setting means 500 will be described below with reference to FIGS. 42 and 43.

In step S801 shown in FIG. 42, the initializing means 502 initializes various parameters.

Then, in step S802, the area reserving means 504 reserves two areas, i.e., an area Z1 for placing textures depending on a plurality of viewpoints and an area Z2 for actual texture mapping, in the texture area 34a of the image memory 34.

In step S803, the texture setting means 500 stores an initial value "0" in an index register i used for searching for a viewpoint, thus initializing the index register i. In step S804, the main object processing means 506 performs its processing sequence to generate a texture relative to a main object, as described later on.

In step S805, the texture setting means 500 stores an initial value "0" in an index register m used for searching for records in the auxiliary object information table 540, thus initializing the index register m.

In step S806, the auxiliary object processing means 508 performs its processing sequence to generate textures relative to auxiliary objects, as described later on.

In step S807, the texture rendering means 510 renders the textures in the rendering area 34b again at the set coordinates in the texture area Z1.

In step S808, the table generating means 512 generates the texture information table 202. Specifically, if the number of deformation patterns for auxiliary objects is B, then the table generating means 512 stores set coordinates where a texture image is plotted, the motion coordinates of the main object, and the motion coordinates of the 1st through nth auxiliary objects, in the (B × i + m)th record in the texture information table 202.

In step S809, the set coordinate updating means 514 updates the set coordinates. In step S810, the processing completion determining means 516 determines whether the texture rendering process for the auxiliary objects with respect to all the deformation patterns has been finished or not, based on whether or not the value of the index register m is equal to or greater than the maximum number B of the deformation patterns.

If the texture rendering process has not been finished with respect to all the deformation patterns, then control goes back to step S806 to perform the texture rendering process for the auxiliary objects with respect to a next deformation pattern. If the texture rendering process has been finished with respect to all the deformation patterns, then control proceeds to step S812 shown in FIG. 43 to increment the value of the index register i by + 1. Thereafter, in step S813, the processing completion determining means 516 determines whether the texture rendering process for all the viewpoints registered in the viewpoint coordinate table 302 has been completed or not, based on whether or not the value of the index register i is equal to or greater than the number A of viewpoints registered in the viewpoint coordinate table 302.

If the texture rendering process for all the viewpoints has not been completed, then control goes back to step S804 shown in FIG. 42 to perform the texture rendering process for a next viewpoint. If the texture rendering process for all the viewpoints has been completed, then the processing sequence of the texture setting means 500 is brought to an end.

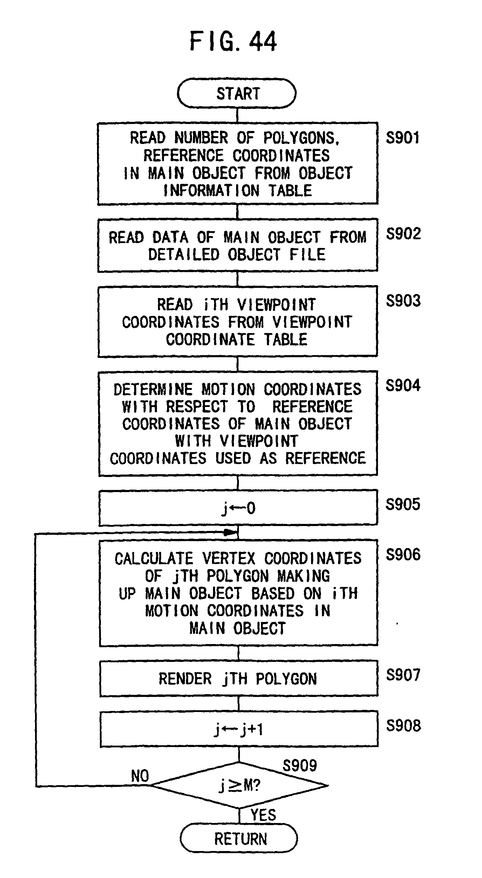

A processing sequence of the main object processing means 506 will be described below with reference to FIG. 44.

In step S901, the data reading means 520 reads at least the number of polygons and reference coordinates from the object information table 230.

Then, in step S902, the main object reading means 522 reads data of the main object from the detailed object file 250. In step S903, the data reading means 520 reads ith viewpoint coordinates from the viewpoint coordinate table 302.

In step S904, the motion coordinate calculating means 524 determines motion coordinates with respect to reference coordinates of the main object when viewpoint coordinates are used as a reference. Specifically, the main object is moved while each of the viewpoints is being fixed at a reference position, so that the main object is seen as if from the present viewpoint. The motion coordinates of the main object at this time, i.e., object coordinates that have been moved, are determined. The motion coordinates thus determined are defined as motion coordinates based on the ith viewpoint coordinates, i.e., ith motion coordinates in the main object.

In step S905, the main object processing means 506 stores "0" in an index register j for searching for a polygon, thus initializing the index register j.

In step S906, the vertex coordinate calculating means 526 calculates vertex coordinates of a jth polygon that makes up the main object based on the ith motion coordinates in the main object.

In step S907, the rendering means 528 performs the rendering process, including texture expression and hidden surface removal, on the jth polygon, and renders the polygon in the rendering area 34b of the image memory 34.

In step S908, the main object processing means 506 updates the value of the index register j by + 1. In step S909, the processing completion determining means 530 determines whether the texture rendering process with respect to all the polygons has been finished or not, based on whether or not the value of the index register j is equal to or greater than the number M of the polygons of the main object.

If the texture rendering process with respect to all the polygons has not been finished, then control goes back to step S906 to perform the rendering process on a next polygon. If the texture rendering process with respect to all the polygons has been finished, then the processing sequence of the main object processing means 506 comes to an end.

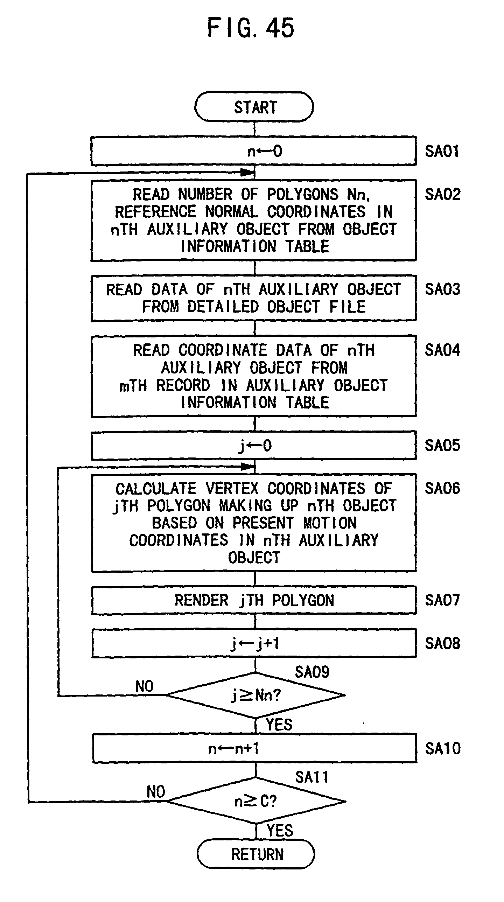

A processing sequence of the auxiliary object processing means 508 will be described below with reference to FIG. 45.

In step SA01, the auxiliary object processing means 508 stores an initial value "0" in an index register n for searching for an auxiliary object, thus initializing the index register n.

In step SA02, the data reading means 542 reads at least the number Nn of polygons and reference normal coordinates from in an nth auxiliary object from the object information table 230.

Then, in step SA03, the auxiliary object reading means 542 reads data of the nth auxiliary object from the detailed object file 250. In step SA04, the data reading means 542 reads motion coordinates for the nth auxiliary object from an mth record in the auxiliary object information table 540.

In step SA05, the auxiliary object processing means 508 stores "0" in an index register j for searching for a polygon, thus initializing the index register j.

In step SA06, the vertex coordinate calculating means 546 calculates vertex coordinates of a jth polygon that makes up the nth auxiliary object based on the present motion coordinates in the nth auxiliary object.

In step SA07, the rendering means 548 performs the rendering process, including texture expression and hidden surface removal, on the jth polygon, and renders the polygon in the rendering area 34b of the image memory 34.

In step SA08, the auxiliary object processing means 508 updates the value of the index register j by + 1. In step SA09, the processing completion determining means 550 determines whether the texture rendering process with respect to all the polygons has been finished or not, based on whether or not the value of the index register j is equal to or greater than the number Nn of the polygons of the auxiliary object.

If the texture rendering process with respect to all the polygons has not been finished, then control goes back to step SA06 to perform the rendering process on a next polygon. If the texture rendering process has been completed with respect to all polygons, then control goes to step SA10 in which the auxiliary object processing means 508 increments the value of the index register n by + 1.

In step SA11, the processing completion determining means 550 determines whether the texture rendering process with respect to all the auxiliary objects has been finished or not, based on whether or not the value of the index register n is equal to or greater than the number C of the auxiliary objects.

If the texture rendering process with respect to all the auxiliary objects has not been finished, then control goes back to step SA02 to perform the texture rendering process on a next auxiliary object. If the texture rendering process with respect to all the auxiliary objects has been finished, then the processing sequence of the auxiliary object processing means 508 is ended.

The image plotting means 204, the selective plotting means 212, the detailed rendering means 236, and the simple rendering means 238 perform substantially the same processing sequence as those of the object group plotting means 200A according to the first embodiment, except that motion coordinates are searched for or approximately searched for based on a combination of the motion coordinates of the main object and the motion coordinates of the auxiliary objects.

With the object group plotting means 200E according to the fifth embodiment, as with the object group plotting means 200B according to the second embodiment, the simple rendering means 238 of the image plotting means 204 may incorporate the correcting means 292.

The object group plotting means 200E according to the fifth embodiment can be applied to objects which have complex shapes and comprise components that change variously.

Inasmuch as a plurality of texture images based on a combination of images representing not only the direction of objects but also the deformations of auxiliary objects are prepared, the principles of the fifth embodiment are applicable to a situation where a number of fishes are oriented in various directions and components thereof, e.g., tail fins and dorsal fins, change in a complex manner.

In the object group plotting means 200E according to the fifth embodiment, the texture setting means 500 can automatically generate a plurality of texture images as a combination of those produced when the main object is viewed from various viewpoints and those produced when the auxiliary objects are moved in various directions. Therefore, the object group plotting means 200E is capable of quickly correcting and adding deformation patterns for the auxiliary objects, correcting the directions of the main object, and correcting the objects themselves.

Although certain preferred embodiments of the present invention have been shown and described in detail, it should be understood that various changes and modifications may be made therein without departing from the scope of the appended claims.

## Claims

1. A method of rendering an image using a computer, comprising the steps of
generating a plurality of texture images of a single object as viewed from different viewpoints;
rendering a plurality of objects identical to the single object by selecting according to a predetermined decision criterion either a normal rendering process or a simple rendering process for rendering individual ones of the plurality of objects, the normal rendering process plotting objects in detail and the simple rendering process plotting objects simply; and
if the simple rendering process is selected for one of the plurality of objects, selecting a texture image from the plurality of texture images depending on a direction to be plotted and using the selected texture image as a texture for the one of the plurality of objects, wherein the predetermined decision criterion for selecting either the normal rendering process or the simple rendering process includes
selecting the normal rendering process when the motion of the object with respect to the scene to be displayed is greater than a certain range.

2. A method as claimed in Claim 1, wherein the selecting either the normal rendering process or the simple rendering process based on the predetermined criteria of whether the object is important comprises
providing an object information table for storing information required for each object, the information including an indication that the object is important for visual effects, and
selecting either the normal rendering process or the simple rendering process based upon the stored indication.

3. A method as claimed in Claim 1, wherein the selecting either the normal rendering process or the simple rendering process based on the predetermined criteria of whether the motion of the object is greater than a certain range, comprises
providing a motion information table for storing information required for each object, the information including present and previous motion x, y, z co-ordinates,
reading the value of the present and the previous motion co-ordinates of the object,
comparing the value of the previous motion co-ordinates of the object with the present motion co-ordinates of the object, and
selecting the normal rendering process or the simple rendering process based upon whether or not an amount of motion of the object is equal to or greater than a predetermined amount.

4. A method as claimed in Claim 3, wherein the normal rendering is selected if the amount of motion is equal to or greater than a predetermined amount, and otherwise the simple rendering is selected.

5. An apparatus for rendering an image using a computer, the apparatus comprising
texture setting means (300) for generating a plurality of texture images of a single object as viewed from different viewpoints;
selective plotting means (212) for rendering a plurality of objects identical to the single object by selecting according to a predetermined decision criterion either a normal rendering process or a simple rendering process for rendering individual ones of the plurality of objects, the normal rendering process plotting objects in detail and the simple rendering process plotting objects simply; and
if the simple rendering process is selected for one of the plurality of objects, selecting a texture image from the plurality of texture images depending on a direction to be plotted and using the selected texture image as a texture for the one of the plurality of objects, wherein the predetermined decision criterion for selecting either the normal rendering process or the simple rendering process includes
selecting the normal rendering process when the motion of the object with respect to the scene to be displayed is greater than a certain range.

6. An apparatus as claimed in Claim 5, comprising
an object information table (230) for storing information required for each object, the information including an indication that the object is important for visual effects, and
a detailed/simple process determining means (234) for selecting either the normal rendering process or a simple rendering process, wherein the selection of the normal or the simple rendering process based on the predetermined criteria of whether the object is important comprises
selecting either the normal rendering process or the simple rendering process based upon the indication stored in the object information table.

7. An apparatus as claimed in Claim 5, comprising
a motion information table for storing information required for each object, the information including present and previous motion x, y, z co-ordinates, and
a detailed/simple process determining means (234) for selecting either the normal rendering process or a simple rendering process, wherein the selecting either the normal rendering process or the simple rendering process based on the predetermined criteria of whether the motion of the object is greater than a certain range, comprises
reading the value of the present and the preyious motion co-ordinates of the object,
comparing the value of the previous motion co-ordinates of the object with the present motion co-ordinates of the object, and
selecting the normal rendering process or the simple rendering process based upon whether or not an amount of motion of the object is equal to or greater than a predetermined amount.

8. An apparatus as claimed in Claim 7, wherein the normal rendering is selected if the amount of motion is equal to or greater than a predetermined amount, and otherwise the simple rendering is selected.

9. Computer software having program code for providing to a computer for carrying out all the steps of the method according to any of Claims 1 to 4.

10. A recording medium in which computer software according to claim 9 is stored.

## Patentansprüche

1. Verfahren zum Rendern (Bildaufbereiten) eines Bildes mittels eines Computers mit den Verfahrensschritten:
Erzeugen einer Mehrzahl von Texturbildern eines einzelnen Objekts, so wie dieses von verschiedenen Betrachtungspunkten aus gesehen wird,
Rendern einer Mehrzahl von mit dem einzelnen Objekt identischen Objekten durch Auswählen entweder eines normalen Rendering-Prozesses oder eines einfachen Rendering-Prozesses für das Rendern individueller Exemplare aus der Mehrzahl von Objekten nach einem vorbestimmten Auswahlkriterium, wobei der normale Rendering-Prozeß Objekte im Detail plottet, und der einfache Rendering-Prozeß Objekt einfach plottet, und
falls der einfache Rendering-Prozeß für eines aus der Mehrzahl von Objekten ausgewählt wird, Auswählen eines Texturbilds aus der Mehrzahl von Texturbildern in Abhängigkeit von der darzustellenden Richtung und Benutzen des ausgewählten Texturbilds als Textur für das eine aus der Mehrzahl von Objekten, wobei das vorbestimmte Auswahlkriterium für die Auswahl entweder des normalen Rendering-Prozesses oder des einfachen Rendering-Prozesses das Auswählen des normalen Rendering-Prozesses beinhaltet, wenn die Bewegung des Objekts relativ zu der darzustellenden Szene größer ist als ein vorbestimmter Bereich.

2. Verfahren nach Anspruch 1, bei dem das Auswählen entweder des normalen Rendering-Prozesses oder des einfachen Rendering-Prozesses auf der Basis der vorbestimmten Kriterien darüber, ob das Objekt wichtig ist, folgende Schritte umfaßt:
das Bereitstellen einer Objektinformationstabelle zum Speichern einer für jedes Objekt benötigten Information, wobei diese Information eine Angabe enthält, daß das Objekt für visuelle Effekte wichtig ist, und
das Auswählen entweder des normalen Rendering-Prozesses oder des einfachen Rendering-Prozesses auf der Basis der gespeicherten Angabe.

3. Verfahren nach Anspruch 1, bei dem das Auswählen entweder des normalen Rendering-Prozesses oder des einfachen Rendering-Prozesses auf der Basis der vorbestimmten Kriterien darüber, ob die Bewegung des Objekts größer ist als ein vorbestimmter Bereich, folgende Schritte umfaßt:
das Bereitstellen einer Bewegungsinformationstabelle zum Speichern einer Information, die für jedes Objekt benötigt wird, wobei diese Information die laufenden und die vorhergehenden x-, y-, z-Bewegungskoordinaten enthält, und
das Auslesen des Werts der laufenden und der vorhergehenden Bewegungskoordinaten des Objekts, das Vergleichen des Werts der vorhergehenden Bewegungskoordinaten des Objekts mit den laufenden Bewegungskoordinaten des Objekts und
das Auswählen des normalen Rendering-Prozesses oder des einfachen Rendering-Prozesses auf der Basis, ob die Größe der Bewegung des Objekts gleich oder größer ist als eine vorbestimmte Größe oder nicht.

4. Verfahren nach Anspruch 3, bei dem der normale Rendering-Prozeß ausgewählt wird, wenn die Größe der Bewegung des Objekts gleich oder größer ist als eine vorbestimmte Größe, und andernfalls der einfache Rendering-Prozeß ausgewählt wird.

5. Gerät zum Rendern (Bildaufbereiten) eines Bildes mittels eines Computers, wobei das Gerät aufweist:
eine Textur-Festlegungseinrichtung (300) zum Erzeugen einer Mehrzahl von Texturbildern eines einzelnen Objekts, so wie dieses von verschiedenen Betrachtungspunkten aus gesehen wird,
eine selektive Plottereinrichtung (212) zum Rendern einer Mehrzahl von mit dem einzelnen Objekt identischen Objekten durch Auswählen entweder eines normalen Rendering-Prozesses oder eines einfachen Rendering-Prozesses für das Rendern individueller Exemplare aus der Mehrzahl von Objekten nach einem vorbestimmten Auswahlkriterium, wobei der normale Rendering-Prozeß Objekte im Detail plottet, und der einfache Rendering-Prozeß Objekt einfach plottet, und
falls der einfache Rendering-Prozeß für eines aus der Mehrzahl von Objekten ausgewählt wird, Auswählen eines Texturbilds aus der Mehrzahl von Texturbildern in Abhängigkeit von der darzustellenden Richtung und Benutzen des ausgewählten Texturbilds als Textur für das eine aus der Mehrzahl von Objekten, wobei das vorbestimmte Auswahlkriterium für die Auswahl entweder des normalen Rendering-Prozesses oder des einfachen Rendering-Prozesses das Auswählen des normalen Rendering-Prozesses beinhaltet, wenn die Bewegung des Objekts relativ zu der darzustellenden Szene größer ist als ein vorbestimmter Bereich.

6. Gerät nach Anspruch 5, das aufweist:
eine Objektinformationstabelle (230) zum Speichern einer für jedes Objekt benötigten Information, wobei diese Information eine Angabe enthält, daß das Objekt für visuelle Effekte wichtig ist, und
eine Einrichtung (234) zum Festlegen eines detaillierten/einfachen Prozesses zum Auswählen entweder eines normalen Rendering-Prozesses oder eines einfachen Rendering-Prozesses, wobei das Auswählen des normalen Rendering-Prozesses oder des einfachen Rendering-Prozesses auf vorbestimmten Kriterien darüber basiert, ob das Objekt wichtig ist,
Auswählen entweder des normalen Rendering-Prozesses oder des einfachen Rendering-Prozesses auf der Basis der in der Objektinformationstabelle gespeicherten Angabe.

7. Gerät nach Anspruch 5, das aufweist:
eine Bewegungsinformationstabelle zum Speichern einer Information, die für jedes Objekt benötigt wird, wobei diese Information die laufenden und die vorhergehenden x-, y-, z-Bewegungskoordinaten enthält, und
eine Einrichtung (234) zum Festlegen eines detaillierten/einfachen Prozesses zum Auswählen entweder eines normalen Rendering-Prozesses oder eines einfachen Rendering-Prozesses, wobei das Auswählen entweder des normalen Rendering-Prozesses oder des einfachen Rendering-Prozesses auf der Basis von vorbestimmten Kriterien darüber, ob die Bewegung des Objekts größer ist als ein vorbestimmter Bereich umfaßt:
das Auslesen des Werts der laufenden und der vorhergehenden Bewegungskoordinaten des Objekts,
das Vergleichen des Werts der vorhergehenden Bewegungskoordinaten des Objekts mit den laufenden Bewegungskoordinaten des Objekts und
das Auswählen des normalen Rendering-Prozesses oder des einfachen Rendering-Prozesses auf der Basis, ob die Größe der Bewegung des Objekts gleich oder größer ist als eine vorbestimmte Größe oder nicht.

8. Gerät nach Anspruch 7, bei dem der normale Rendering-Prozeß ausgewählt wird, wenn die Größe der Bewegung des Objekts gleich oder größer ist als eine vorbestimmte Größe, und andernfalls der einfache Rendering-Prozeß ausgewählt wird.

9. Computersoftware mit einem Programmcode zur Lieferung an einen Computer für die Ausführung aller Schritte des Verfahrens nach einem der Ansprüche 1 bis 4.

10. Aufzeichnungsmedium, in dem die Computersoftware nach Anspruch 9 gespeichert ist

## Revendications

1. Procédé de rendu d'image utilisant un ordinateur, comprenant les étapes de génération d'une pluralité d'images de texture d'un objet unique comme vu à partir de différents points de vue ;
rendu d'une pluralité d'objets identiques à l'objet unique en sélectionnant selon un critère de test prédéterminé soit un traitement de rendu normal soit un traitement de rendu simple pour rendre individuel ceux de la pluralité d'objets, le traitement de rendu normal traçant des objets en détail et le traitement de rendu simple traçant des objets simplement ; et
si le traitement de rendu simple est sélectionné pour un de la pluralité d'objets, sélection d'une image de texture à partir de la pluralité d'images de texture en fonction d'une direction à tracer et utilisation de l'image de texture sélectionnée en tant que texture pour celui de la pluralité d'objets, dans lequel le critère de test prédéterminé pour sélectionner soit le traitement de rendu normal soit le traitement de rendu simple comprend
la sélection de traitement du rendu normal lorsque le mouvement de l'objet par rapport à la scène à afficher est plus grand qu'une certaine plage.

2. Procédé selon la revendication 1, dans lequel la sélection soit du traitement de rendu normal soit du traitement de rendu simple sur la base du critère prédéterminé selon que l'objet est important, comprend
la fourniture d'une table d'informations d'objet pour stocker des informations requises pour chaque objet, les informations comprenant une indication que l'objet est important pour des effets visuels, et
la sélection soit du traitement de rendu normal soit du traitement de rendu simple sur la base de l'indication stockée.

3. Procédé selon la revendication 1, dans lequel la sélection soit du traitement de rendu normal soit du traitement de rendu simple sur la base du critère prédéterminé selon que le mouvement de l'objet est plus grand qu'une certaine plage, comprend
la fourniture d'une table d'informations de mouvement pour stocker les informations requises pour chaque objet, les informations comprenant les coordonnées x, y, z de mouvement présentes et précédentes,
la lecture de la valeur des coordonnées de mouvement présentes et précédentes de l'objet,
la comparaison de la valeur des coordonnées de mouvement précédentes de l'objet avec les coordonnées de mouvement présentes de l'objet, et
la sélection du traitement de rendu normal ou du traitement de rendu simple sur la base selon qu'une quantité de mouvement de l'objet est ou non égale ou supérieure à une quantité prédéterminée.

4. Procédé selon la revendication 3, dans lequel le rendu normal est sélectionné si la quantité de mouvement est égale ou supérieure à une quantité prédéterminée, et sinon le rendu simple est sélectionné.

5. Appareil pour le rendu d'une image en utilisant un ordinateur, l'appareil comprenant :
un moyen de réglage de texture (300) pour générer une pluralité d'images de texture d'un objet unique comme vu à partir de différents points de vue ;
un moyen de tracer sélectif (212) pour rendre une pluralité d'objets identiques à l'objet unique en sélectionnant, selon un critère de test prédéterminé, soit un traitement de rendu normal soit un traitement de rendu simple pour rendre individuel ceux de la pluralité d'objets, le traitement de rendu normal traçant des objets en détail et le traitement de rendu simple traçant des objets simplement ; et
si le traitement de rendu simple est sélectionné pour un de la pluralité d'objets, sélection d'une image de texture à partir de la pluralité d'images de texture en fonction d'une direction à tracer et utilisation de l'image de texture sélectionnée comme une texture pour celui de la pluralité d'objets, dans lequel le critère de test prédéterminé pour sélectionner soit le traitement de rendu normal soit le traitement de rendu simple comprend
la sélection du traitement de rendu normal lorsque le mouvement de l'objet par rapport à la scène à afficher est plus grand qu'une certaine plage.

6. Appareil selon la revendication 5, comprenant
une table d'informations d'objet (230) pour stocker des informations requises pour chaque objet, les informations comprenant une indication que l'objet est important pour des effets visuels, et
un moyen de détermination de traitement simple/détaillé (234) pour sélectionner soit le traitement de rendu normal soit un traitement de rendu simple, dans lequel la sélection du traitement de rendu normal ou simple sur la base du critère prédéterminé selon que l'objet est important, comprend
la sélection soit du traitement de rendu normal soit du traitement de rendu simple sur la base de l'indication stockée dans la table d'informations d'objet.

7. Appareil selon la revendication 5, comprenant
une table d'informations de mouvement pour stocker des informations requises pour chaque objet, les informations comprenant des coordonnées x, y, z de mouvement présentes et précédentes, et
un moyen de détermination de traitement détaillé/simple (234) pour sélectionner soit le traitement de rendu normal soit un traitement de rendu simple, dans lequel la sélection soit du traitement de rendu normal soit du traitement de rendu simple sur la base du critère prédéterminé selon que le mouvement de l'objet est plus grand qu'une certaine plage, comprend
la lecture de la valeur des coordonnées de mouvement présentes et précédentes de l'objet,
la comparaison de la valeur des coordonnées de mouvement précédentes de l'objet avec les coordonnées de mouvement présentes de l'objet, et
la sélection du traitement de rendu normal ou du traitement de rendu simple sur la base selon qu'une quantité de mouvement de l'objet est ou non égale ou supérieure à une quantité prédéterminée.

8. Appareil selon la revendication 7, dans lequel le rendu normal est sélectionné si la quantité de mouvement est égale ou supérieure à une quantité prédéterminée, et sinon le rendu simple est sélectionné.

9. Logiciel informatique ayant un code de programme pour fournir à un ordinateur pour réaliser toutes les étapes du procédé selon l'une quelconque des revendications 1 à 4.

10. Support d'enregistrement dans lequel un logiciel informatique est stocké selon la revendication 9.
